# EUROPEAN PATENT APPLICATION

(11) **EP 3 141 995 A1**
(43) Date of publication of application: **15.03.2017**
(21) Application number: 16156824.1
(22) Date of filing: 23.02.2016
(51) Int. Cl.: G06F 3/0488, G06F 3/14, H04N 1/32, G06F 3/147

(54) **MOBILE TERMINAL AND METHOD FOR CONTROLLING THE SAME**

(30) Priority: 08.09.2015 KR 20150127057
(71) Applicant: LG Electronics Inc., Seoul 07336 (KR)
(72) Inventor: CHOE, Dami, Seoul 06772 (KR); JANG, Saehun, Seoul 06772 (KR); YEO, Junhee, Seoul 06772 (KR); KIM, Boram, Seoul 06772 (KR)
(74) Representative: Ter Meer Steinmeister & Partner

(57) **Abstract**

The present invention relates to a mobile terminal capable of performing communication with an image display apparatus and a method for controlling the same. A mobile terminal according to the present invention includes a wireless communication unit (110) that is configured to receive information related to a plurality of image display apparatuses (200-1,..., 200n), arranged adjacent to one another, from the plurality of image display apparatuses (200-1,..., 200n) or an external server (300), a display unit (151) that is configured to output a plurality of objects corresponding to the plurality of image display apparatuses, respectively, and a controller (180) that is configured to obtain an image to be output on at least one of the plurality of image display apparatuses based on information related to the plurality of image display apparatuses, and output the obtained image on an object corresponding to the at least one image display apparatus.

## Description

### BACKGROUND OF THE INVENTION

### 1. Field of the Invention

This specification relates to a mobile terminal capable of performing communication with an image display apparatus, and a method for controlling the same.

### 2. Background of the Invention

Terminals may be divided into mobile/portable terminals and stationary terminals according to their mobility. Also, the mobile terminals may be classified into handheld terminals and vehicle mount terminals according to whether or not a user can directly carry.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. Specifically, in recent time, mobile terminals can receive broadcast and multicast signals to allow viewing of video or television programs.

As it becomes multifunctional, a mobile terminal can be allowed to capture still images or moving images, play music or video files, play games, receive broadcast and the like, so as to be implemented as an integrated multimedia player.

Meanwhile, when a picture frame (or a framed picture) is hung on a wall or the like, the frame has to change to change an image. This brings about a discussion of digital frames capable of facilitating a change of an output image and methods for controlling the same.

Efforts are ongoing to support and increase the functionality of mobile terminals. Such efforts include software and hardware improvements, as well as changes and improvements in the structural components.

### SUMMARY OF THE INVENTION

Therefore, an aspect of the detailed description is to obviate the aforementioned problems and other problems. Another aspect of the detailed description is to provide a mobile terminal capable of controlling an image output on a digital frame, and a method of controlling the same.

To achieve these and other advantages and in accordance with the purpose of this specification, as embodied and broadly described herein, there is provided a mobile terminal including a wireless communication unit that is configured to receive information related to a plurality of image display apparatuses, arranged adjacent to one another, from the plurality of image display apparatuses or an external server, a display unit that is configured to output a plurality of objects corresponding to the plurality of image display apparatuses, respectively, and a controller that is configured to obtain an image to be output on at least one of the plurality of image display apparatuses based on information related to the plurality of image display apparatuses, and output the obtained image on an object corresponding to the at least one image display apparatus.

In an exemplary embodiment, the controller may obtain the image to be output on the at least one of the plurality of image display apparatuses, on the basis of at least one of information regarding relative locations of the plurality of image display apparatuses, size information regarding each of the plurality of image display apparatuses, information related to an image currently output on at least one of the plurality of image display apparatuses, information regarding an ambient environment in which the plurality of image display apparatuses are arranged, and information related to previously-output images of the plurality of image display apparatuses.

In another exemplary embodiment, the controller may obtain an image to be output on the other image display apparatus, on the basis of information related to an image currently output on at least one of the plurality of image display apparatuses.

In another exemplary embodiment, the controller may obtain the image to be output on the other image display apparatus, on the basis of at least one of color information regarding an image currently output on at least one of the plurality of image display apparatuses, object information included in the image, and theme or category information preset for the image.

In another exemplary embodiment, the controller may obtain the image to be output on the other image display apparatus, in response to an input of a rule to be applied to a plurality of images output on the plurality of image display apparatuses, respectively.

In another exemplary embodiment, the controller may output a preview image outputtable on the other image display apparatus and guide information by a rule, which is to be applied to a plurality of images output on the plurality of image display apparatuses, respectively, in response to an input of the rule.

In another exemplary embodiment, the controller may obtain the image to be output on the at least one of the plurality of image display apparatuses, on the basis of at least one of a theme preset for an ambient environment in which the plurality of image display apparatuses are arranged, information related to an external device arranged in the ambient environment, and status information related to the ambient environment.

In another exemplary embodiment, the controller may output a plurality of objects corresponding to the plurality of image display apparatuses, respectively, on the basis of at least one of information regarding relative locations of the plurality of image display apparatuses, and size information regarding each of the plurality of image display apparatuses.

In another exemplary embodiment, the controller may output the plurality of objects corresponding to the plurality of image display apparatuses, respectively, on the basis of captured images of the plurality of image display apparatuses, strength of signals received from the plurality of image display apparatuses, and strength of signals transmitted and received among the plurality of image display apparatuses.

In another exemplary embodiment, the controller may obtain the image to be output on the at least one of the plurality of image display apparatuses, in response to an input of at least one of a rule and a theme to be applied to the plurality of images output on the plurality of image display apparatuses, respectively.

In another exemplary embodiment, the controller may obtain the image to be output on the at least one of the plurality of image display apparatuses, in response to an input of a captured image by a camera.

To achieve these and other advantages and in accordance with the purpose of this specification, as embodied and broadly described herein, there is provided a method for controlling a mobile terminal, the method including (a) receiving information related to a plurality of image display apparatuses, arranged adjacent to one another, from the plurality of image display apparatuses or an external server, (b) outputting a plurality of objects corresponding to the plurality of image display apparatuses, respectively, and (c) obtaining an image to be output on at least one of the plurality of image display apparatuses based on information related to the plurality of image display apparatuses, and outputting the obtained image on an object corresponding to the at least one image display apparatus.

In an exemplary embodiment, the step (c) may include outputting the image to be output on the at least one of the plurality of image display apparatuses, on the basis of at least one of information regarding relative locations of the plurality of image display apparatuses, size information regarding each of the plurality of image display apparatuses, information related to an image currently output on at least one of the plurality of image display apparatuses, information regarding an ambient environment in which the plurality of image display apparatuses are arranged, and information related to previously-output images of the plurality of image display apparatuses.

In another exemplary embodiment, the step (c) may include obtaining an image to be output on the other image display apparatus, on the basis of information related to an image currently output on at least one of the plurality of image display apparatuses.

In another exemplary embodiment, the step (c) may include obtaining the image to be output on the other image display apparatus, on the basis of at least one of color information regarding an image currently output on at least one of the plurality of image display apparatuses, object information included in the image, and theme or category information preset for the image.

In another exemplary embodiment, the step (c) may include obtaining the image to be output on the other image display apparatus, in response to an input of a rule to be applied to a plurality of images output on the plurality of image display apparatuses, respectively.

In another exemplary embodiment, the step (c) may include outputting a preview image outputtable on the other image display apparatus and guide information by a rule, which is to be applied to a plurality of images output on the plurality of image display apparatuses, respectively, in response to an input of the rule.

In another exemplary embodiment, the step (c) may include obtaining the image to be output on the at least one of the plurality of image display apparatuses, on the basis of at least one of a theme preset for an ambient environment in which the plurality of image display apparatuses are arranged, information related to an external device arranged in the ambient environment, and status information related to the ambient environment.

In another exemplary embodiment, the step (b) may include outputting a plurality of objects corresponding to the plurality of image display apparatuses, respectively, on the basis of at least one of information regarding relative locations of the plurality of image display apparatuses, and size information regarding each of the plurality of image display apparatuses.

In another exemplary embodiment, the step (b) may include outputting the plurality of objects corresponding to the plurality of image display apparatuses, respectively, on the basis of captured images of the plurality of image display apparatuses, strength of signals received from the plurality of image display apparatuses, and strength of signals transmitted and received between the plurality of image display apparatuses.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1A is a block diagram of a mobile terminal in accordance with the present invention;
FIGS. 1B and 1C are conceptual views illustrating one example of the mobile terminal, viewed from different directions;
FIG. 2 is a flowchart illustrating a method for controlling a mobile terminal in accordance with the present invention;
FIG. 3 is a conceptual view of a system for providing a digital frame service in accordance with the present invention;
FIGS. 4A and 4B are conceptual views illustrating an exemplary embodiment of a digital frame and a frame object corresponding to the digital frame;
FIG. 5 is a conceptual view illustrating an embodiment of recommending an image to be output on the other (or the remaining) digital frame on the basis of objects of images output on some digital frames;
FIG. 6 is a conceptual view illustrating an embodiment of recommending an image to be output on the other (or the remaining) digital frame on the basis of a category of images output on some digital frames;
FIG. 7 is a conceptual view illustrating an embodiment of recommending an image to be output on the other digital frame on the basis of a theme of images output on some digital frames;
FIG. 8 is a conceptual view illustrating an embodiment of selecting a design principle to be applied to an image of a digital frame;
FIG. 9 is a conceptual view illustrating an embodiment in which a design principle of unity is applied to an image of a digital frame;
FIG. 10 is a conceptual view illustrating an embodiment in which a design principle of gradation is applied to an image of a digital frame;
FIG. 11 is a conceptual view illustrating an embodiment in which a design principle of symmetry is applied to an image of a digital frame;
FIG. 12 is a conceptual view illustrating an embodiment in which a design principle of expansion is applied to an image of a digital frame;
FIGS. 13A to 13C are conceptual views illustrating an embodiment related to a direct setup of an image composition;
FIG. 14 is a conceptual view illustrating an embodiment of editing an image to be output on a digital frame;
FIG. 15 is a conceptual view illustrating an embodiment of a touch input for returning to an initial screen in FIG. 14;
FIG. 16 is a conceptual view illustrating an embodiment of editing a portrait to be output on a digital frame;
FIG. 17 is a conceptual view illustrating an embodiment of setting a theme according to a surrounding space;
FIG. 18 is a conceptual view illustrating an embodiment of outputting a message notifying that a digital frame has been inclined;
FIG. 19 is a conceptual view illustrating an embodiment of outputting a charger-associated message on a digital frame;
FIG. 20 is a conceptual view illustrating an embodiment of outputting a location of a digital frame on another digital frame;
FIG. 21 is a conceptual view illustrating an embodiment of outputting a message notifying inappropriate ambient brightness on a digital frame;
FIG. 22 is a conceptual view illustrating an embodiment of outputting a network error message on a mobile terminal;
FIG. 23 is a conceptual view illustrating an embodiment of recognizing locations of digital frames and outputting information based on the locations; and
FIG. 24 is a conceptual view illustrating an embodiment of selecting a digital frame to which a control signal is to be transmitted.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present disclosure, moreover, the detailed description will be omitted when a specific description for publicly known technologies to which the invention pertains is judged to obscure the gist of the present disclosure. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

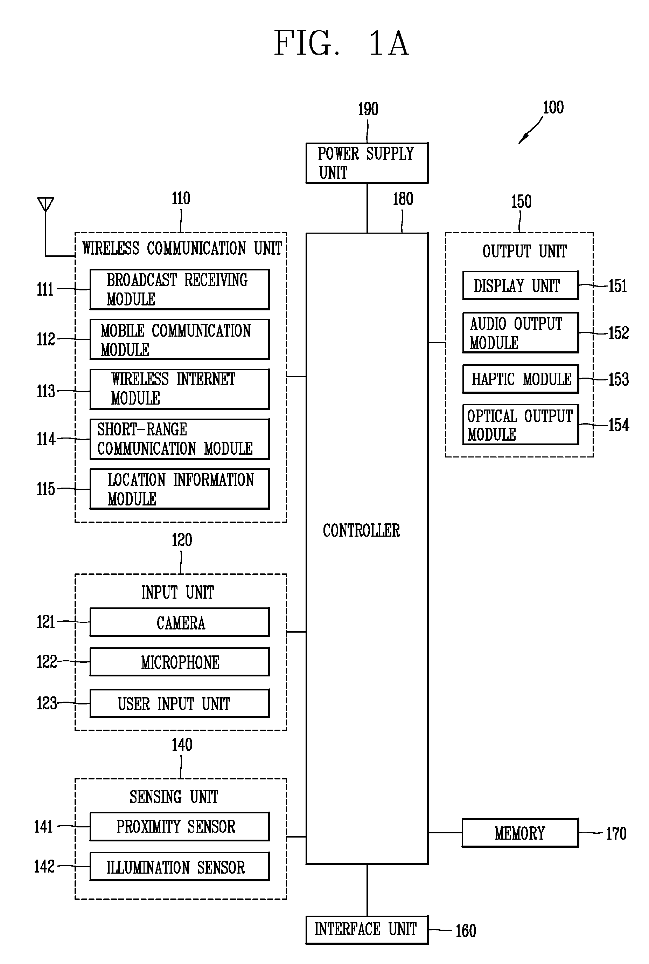

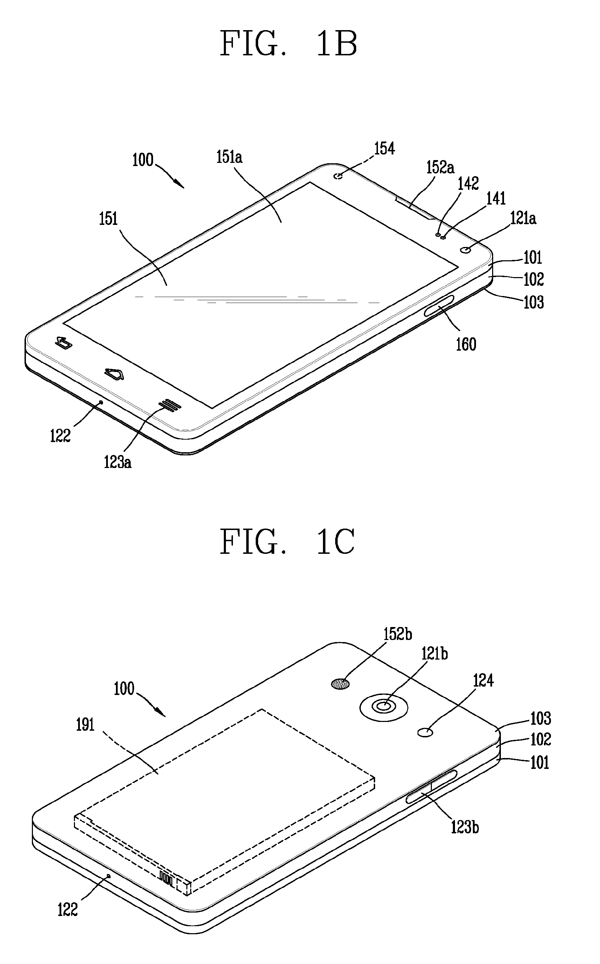

Reference is now made to FIGS. 1A to 1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

In more detail, the wireless communication unit 110 typically includes one or more modules which permit communications such as wireless communications between the mobile terminal 100 and a wireless communication system, communications between the mobile terminal 100 and another mobile terminal, or communications between the mobile terminal 100 and an external server. Further, the wireless communication unit 110 typically includes one or more modules which connect the mobile terminal 100 to one or more networks.

The wireless communication unit 110 includes one or more of a broadcast receiving module 111, a mobile communication module 112, a wireless Internet module 113, a short-range communication module 114, and a location information module 115.

The input unit 120 includes a camera 121 or an image input unit for inputting image signals such as images or video, a microphone 122, which is one type of audio input device for inputting an audio signal, and a user input unit 123 (for example, a touch key, a mechanical key, and the like) for allowing a user to input information. Data (for example, audio, video, image, and the like) is obtained by the input unit 120 and may be analyzed and processed according to user commands.

The sensing unit 140 is typically implemented using one or more sensors configured to sense internal information of the mobile terminal, the surrounding environment of the mobile terminal, user information, and the like. For example, the sensing unit 140 may include at least one of a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like). The mobile terminal disclosed herein may be configured to utilize information obtained from one or more sensors of the sensing unit 140, and combinations thereof.

The output unit 150 is typically configured to output various types of information, such as audio, video, tactile output, and the like. The output unit 150 is shown having at least one of a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the aforementioned various components, or activating application programs stored in the memory 170.

Also, the controller 180 controls some or all of the components illustrated in FIG. 1A according to the execution of an application program that have been stored in the memory 170. In addition, the controller 180 may control at least two of those components included in the mobile terminal to activate the application program.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least part of the components may cooperatively operate to implement an operation, a control or a control method of a mobile terminal according to various embodiments disclosed herein. Also, the operation, the control or the control method of the mobile terminal may be implemented on the mobile terminal by an activation of at least one application program stored in the memory 170.

Hereinafter, description will be given in more detail of the aforementioned components with reference to FIG. 1A, prior to describing various embodiments implemented through the mobile terminal 100.

First, regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), Enhanced Voice-Date Optimized or Enhanced Voice-Data Only (EV-DO), Wideband CDMA (WCDMA), High Speed Downlink Packet access (HSDPA), High Speed Uplink Packet Access (HSUPA), Long Term Evolution (LTE), LTE-advanced (LTE-A) and the like).

Examples of the wireless signals include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), High Speed Uplink Packet Access (HSUPA), Long Term Evolution (LTE), LTE-advanced (LTE-A) and the like. The wireless Internet module 113 may transmit/receive data according to one or more of such wireless Internet technologies, and other Internet technologies as well.

In some embodiments, when the wireless Internet access is implemented according to, for example, WiBro, HSDPA, HSUPA, GSM, CDMA, WCDMA, LTE, LET-A, and the like, as part of a mobile communication network, the wireless Internet module 113 may be understood as a type of the mobile communication module 112.

The short-range communication module 114 is configured to facilitate short-range communications. Suitable technologies for implementing such short-range communications include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

Here, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position (or current position) of the mobile terminal. As an example, the location information module 115 includes a Global Position System (GPS) module, a Wi-Fi module, or both. For example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module. If desired, the location information module 115 may alternatively or additionally function with any of the other modules of the wireless communication unit 110 to obtain data related to the position of the mobile terminal. The location information module 115 is a module used for acquiring the position (or the current position) and may not be limited to a module for directly calculating or acquiring the position of the mobile terminal.

The input unit 120 may be configured to permit various types of inputs to the mobile terminal 100. Examples of such inputs include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. Meanwhile, the cameras 121 may be arranged in a matrix configuration to permit a plurality of images having various angles or focal points to be input to the mobile terminal 100. Also, the cameras 121 may be located in a stereoscopic arrangement to acquire left and right images for implementing a stereoscopic image.

The microphone 122 processes an external audio signal into electric audio (sound) data. The processed audio data can be processed in various manners according to a function being executed in the mobile terminal 100. If desired, the microphone 122 may include assorted noise removing algorithms to remove unwanted noise generated in the course of receiving the external audio signal.

The user input unit 123 is a component that permits input by a user. Such user input may enable the controller 180 to control operation of the mobile terminal 100. The user input unit 123 may include one or more of a mechanical input element (for example, a mechanical key, a button located on a front and/or rear surface or a side surface of the mobile terminal 100, a dome switch, a jog wheel, a jog switch, and the like), or a touch-sensitive input element, among others. As one example, the touch-sensitive input element may be a virtual key, a soft key or a visual key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like, and generate a corresponding sensing signal. The controller 180 generally cooperates with the sending unit 140 to control operation of the mobile terminal 100 or execute data processing, a function or an operation associated with an application program installed in the mobile terminal based on the sensing signal. The sensing unit 140 may be implemented using any of a variety of sensors, some of which will now be described in more detail.

The proximity sensor 141 refers to a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like). In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data (or information) according to whether a touch with respect to a point on the touch screen is either a proximity touch or a contact touch.

A touch sensor can sense a touch (or a touch input) applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched region, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, a corresponding signal(s) may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

Meanwhile, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor may be configured to sense a touch input using a different method, in an activated or deactivated state of the display unit 151. The different method may be related to an activation period of the touch sensor. More specifically, the touch sensor may be activated at a different period according to whether the display unit 151 has been activated or not. That is, the touch sensor may have a different activation period according to whether the display unit 151 has been activated or not, and may sense a touch input applied thereto.

For instance, in a deactivated state of the display unit 151, the touch sensor may be activated with a preset period. In this instance, the preset period may be a time period more than 0. Further, in an activated state of the display unit 151, the touch sensor may be always operated in an activated state. In this instance, an activation period of the touch sensor may be '0' or a value very close to '0'.

Whether the touch sensor is in an activated state or a deactivated state may be determined based on a power consumption amount of the touch sensor. For instance, if a power consumption amount of the touch sensor is equal to or less than a preset value based on '0', it may be determined that the touch sensor is in a deactivated state. Further, if a power consumption amount of the touch sensor exceeds the preset value based on '0', it may be determined that the touch sensor is in an activated state.

If the display unit 151 is in an activated state (hereinafter, will be referred to as an active mode), the touch sensor may wait for input of taps onto the display unit 151, while maintaining an activated state. Further, if the display unit 151 is in a deactivated state (hereinafter, will be referred to as a doze mode), the touch sensor may be activated at preset periods.

When the preset period of the touch sensor is shorter, a sensing speed with respect to taps applied onto the display unit 151 is higher. However, in this instance, a power consumption amount of the touch sensor may be increased. Further, when the preset period of the touch sensor is longer, a sensing speed with respect to taps applied onto the display unit 151 may be lower, while a power consumption amount of the touch sensor is decreased.

Thus, the preset period may be set so that a sensing speed with respect to taps applied onto the display unit 151 is high enough not to be recognized by a user, and so that power consumption can be reduced. For instance, the preset period may be set so that the touch sensor in a deactivated state can be activated about 20 times (1 Hz) per second.

While the display unit 151 is in an activated state, the touch sensor may be also in an activated state. In an activated state, the touch sensor may have an activation period (T) of '0' or a value very close to '0'. Alternatively, in an activated state, the touch sensor may have an activation period (T) much shorter than that set in a deactivated state of the display unit 151, by several times. That is, the touch sensor may be activated with a different period, according to whether the display unit 151 is in an activated state or a deactivated state.

In a doze mode where the display unit 151 is in a doze state and the touch sensor is periodically activated, if a preset touch input (e.g., a first touch input and a second touch input consecutively knocking-on a predetermined region within a predetermined time) is sensed by the touch sensor, the controller 180 can convert the doze mode into an active mode where the flexible display unit and the touch sensor are activated.

The touch sensor may be driven at a different period based on a state of the display unit 151. For instance, when the display unit 151 is in a closed state, a doze mode may be executed. Further, when a closed state is converted into an open state, an active mode may be executed.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the mobile terminal. The photo sensor may be configured to scan movement of the physical object in proximity to the touch screen. In more detail, the photo sensor may include photo diodes and transistors (TR) at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the flexible display unit 151 may be implemented as a stereoscopic display unit for displaying stereoscopic images.

A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule alarm, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a flash memory type, a hard disk type, a solid state disk (SSD) type, a silicon disk drive (SDD) type, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control an operation associated with an application program and the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type the body of the portable electronic device. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of portable electronic device (for example, bar-type, watch-type, glasses-type, and the like). However, such teachings with regard to a particular type of portable electronic device will generally apply to other types of mobile terminals as well.

The body of the mobile terminal may be understood to indicate the mobile terminal 100 by regarding the mobile terminal 100 as at least one assembly.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151 a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121 b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151 a and the front case 101, between the front case 101 and the rear case 102, or between the rear case 102 and the rear cover 103, to hermetically seal an inner space when those cases are coupled.

The mobile terminal 100 may include a display unit 151, first and second audio output module 152a and 152b, a proximity sensor 141, an illumination sensor 142, an optical output module 154, first and second cameras 121 a and 121b, first and second manipulation units 123a and 123b, a microphone 122, an interface unit 160, and the like.

Hereinafter, as illustrated in FIGS. 1B and 1C, description will be given of the exemplary mobile terminal 100 in which the front surface of the terminal body is shown having the display unit 151, the first audio output module 152a, the proximity sensor 141, the illumination sensor 142, the optical output module 154, the first camera 121 a, and the first manipulation unit 123a, the side surface of the terminal body is shown having the second manipulation unit 123b, the microphone 122, and the interface unit 160, and the rear surface of the terminal body is shown having the second audio output module 152b and the second camera 121 b.

However, those components may not be limited to the arrangement. Some components may be omitted or rearranged or located on different surfaces. For example, the first manipulation unit 123a may be located on another surface of the terminal body, and the second audio output module 152b may be located on the side surface of the terminal body other than the rear surface of the terminal body.

The display unit 151 outputs information processed in the mobile terminal 100. For example, the display unit 151 may display execution screen information of an application program executing at the mobile terminal 100 or user interface (UI) and graphic user interface (GUI) information in response to the execution screen information.

The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151 a and a display on a rear surface of the window 151 a, or a metal wire which is patterned directly on the rear surface of the window 151 a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a receiver for transferring call sounds to a user's ear and the second audio output module 152b may be implemented in the form of a loud speaker to output alarm sounds, multimedia audio reproduction, and the like.

The window 151 a of the display unit 151 will typically include an aperture to permit audio generated by the first audio output module 152a to pass. One alternative is to allow audio to be released along an assembly gap between the structural bodies (for example, a gap between the window 151 a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule alarm, an email reception, information reception through an application, and the like. When a user has checked a generated event, the controller 180 can control the optical output module 154 to stop the light output.

The first camera 121 a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

When the rear input unit is provided at the rear surface of the terminal body, a new type of user interface using this may be implemented. Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 may be configured to receive user's voice and other sounds. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121 b is shown located at the rear side of the terminal body and includes an image capturing direction that is substantially opposite to the image capturing direction of the first camera unit 121 a.

The second camera 121 b can include a plurality of lenses arranged along at least one line. The plurality of lenses may also be arranged in a matrix configuration. The cameras may be referred to as an 'array camera.' When the second camera 121b is implemented as an array camera, images may be captured in various manners using the plurality of lenses and images with better qualities.

A flash 124 is shown adjacent to the second camera 121b. When an image of a subject is captured with the camera 121 b, the flash 124 may illuminate the subject.

The second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body.

The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

Hereinafter, description will be given of a communication system operable with a mobile terminal 100 according to the present invention.

First, such communication systems utilize different air interfaces and/or physical layers. Examples of such air interfaces utilized by the communication systems include Frequency Division Multiple Access (FDMA), Time Division Multiple Access (TDMA), Code Division Multiple Access (CDMA), and Universal Mobile Telecommunications System (UMTS) (specifically, the Long Term Evolution (LTE) and LTE-advanced (LTE-A), the Global System for Mobile Communications (GSM), and the like).

By way of non-limiting example only, further description will relate to a CDMA communication system, but such teachings apply equally to other system types including an Orthogonal Frequency Division Multiplexing (OFDM) wireless communication system as well as the CDMA wireless communication system.

A CDMA wireless communication system is shown having a plurality of mobile terminals, a plurality of base stations (BSs), base station controllers (BSCs), and a mobile switching center (MSC). The MSC is configured to interface with a conventional Public Switch Telephone Network (PSTN). The MSC is also configured to interface with the BSCs. The BSCs are coupled to the base stations via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs can be included in the CDMA wireless communication system.

Each base station may include one or more sectors, each sector having an omni-directional antenna or an antenna pointed in a particular direction radially away from the base station. Alternatively, each sector may include two or more different antennas. Each base station may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations may also be referred to as Base Station Transceiver Subsystems (BTSs). In some cases, the term "base station" may be used to refer collectively to a BSC, and one or more base stations. The base stations may also be denoted as "cell sites." Alternatively, individual sectors of a given base station may be referred to as cell sites.

A broadcasting transmitter (BT) transmits a broadcast signal to the mobile terminals 100 operating within the system. The broadcast receiving module 111 (FIG. 1) is typically configured inside the mobile terminal 100 to receive broadcast signals transmitted by the BT.

In addition, the CDMA wireless communication system may be linked to a Global Positioning system (GPS) for checking a position of the mobile terminal 100. Such satellites 300 facilitate locating the position of the mobile terminal 100. Two satellites are depicted but it is understood that useful position information may be obtained with greater or fewer satellites than two satellites. Here, the positioning of the mobile terminal 100 may be carried out by using every positioning technology as well as the GPS positioning technology. Also, at least one of the GPS satellites may alternatively or additionally be configured to provide satellite DMB transmissions.

The location information module 115 is generally configured to detect, calculate, derive or otherwise identify a position (or current position) of the mobile terminal. As an example, the location information module 115 includes a Global Position System (GPS) module, a Wi-Fi module, or both. If necessary, the location information module 115 may alternatively or additionally function with any of the other modules of the wireless communication unit 110 to obtain data related to the position of the mobile terminal.

The GPS module 115 can measure an accurate time and distance from three or more satellites, and accurately calculate three-dimensional (3D) current location information of the mobile terminal according to the latitude, longitude and altitude values by applying trigonometry to the measured time and distance. A method of acquiring distance and time information from three satellites and performing error correction with another single satellite may be widely used. Furthermore, the GPS module can acquire speed information by continuously calculating a current position in real time. Sometimes, accuracy of a measured position may be compromised when the mobile terminal is located in a blind spot of satellite signals, such as being located in an indoor space. In order to minimize the effect of such blind spots, an alternative or supplemental location technique, such as Wi-Fi Positioning System (WPS), may be utilized.

The Wi-Fi positioning system (WPS) refers to a location determination technology based on a wireless local area network (WLAN) using Wi-Fi as a technology for tracking the location of the mobile terminal 100. This technology typically includes the use of a Wi-Fi module in the mobile terminal 100 and a wireless access point for communicating with the Wi-Fi module.

The Wi-Fi positioning system may include a Wi-Fi location determination server, a mobile terminal 100, a wireless access point (AP) connected to the mobile terminal 100, and a database stored with wireless AP information.

The mobile terminal 100 connected to the wireless AP may transmit a location information request message to the Wi-Fi location determination server.

The Wi-Fi location determination server extracts the information of the wireless AP connected to the mobile terminal 100, based on the location information request message (or signal) of the mobile terminal 100. The information of the wireless AP may be transmitted to the Wi-Fi location determination server through the mobile terminal 100, or may be transmitted to the Wi-Fi location determination server from the wireless AP.

The information of the wireless AP extracted based on the location information request message of the mobile terminal 100 may include one or more of media access control (MAC) address, service set identification (SSID), received signal strength indicator (RSSI), reference signal received Power(RSRP), reference signal received quality(RSRQ), channel information, privacy, network type, signal strength, noise strength, and the like.

The Wi-Fi location determination server may receive the information of the wireless AP connected to the mobile terminal 100 as described above, and may extract wireless AP information corresponding to the wireless AP connected to the mobile terminal from the pre-established database. The information of any wireless APs stored in the database may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like. In order to remove wireless APs provided using a mobile AP or an illegal MAC address during a location determining process, the Wi-Fi location determination server may extract only a predetermined number of wireless AP information in order of high RSSI.

Then, the Wi-Fi location determination server may extract (analyze) location information of the mobile terminal 100 using at least one wireless AP information extracted from the database. The included information and the received wireless AP information may be compared with each other so as to extract (or analyze) the location information of the mobile terminal 100.

A method for extracting (analyzing) location information of the mobile terminal 100 may include a Cell-ID method, a fingerprint method, a trigonometry method, a landmark method, and the like.

The Cell-ID method is used to determine a position of a wireless AP having the largest signal strength, among peripheral wireless AP information collected by a mobile terminal, as a position of the mobile terminal. The Cell-ID method is an implementation that is minimally complex, does not require additional costs, and location information can be rapidly acquired. However, in the Cell-ID method, the precision of positioning may fall below a desired threshold when the installation density of wireless APs is low.

The fingerprint method is used to collect signal strength information by selecting a reference position from a service area, and to track a position of a mobile terminal using the signal strength information transmitted from the mobile terminal based on the collected information. In order to use the fingerprint method, it is common for the characteristics of radio signals to be pre-stored in the form of a database.

The trigonometry method is used to calculate a position of a mobile terminal based on a distance between coordinates of at least three wireless APs and the mobile terminal. In order to measure the distance between the mobile terminal and the wireless APs, signal strength may be converted into distance information, Time of Arrival (ToA), Time Difference of Arrival (TDoA), Angle of Arrival (AoA), or the like may be taken for transmitted wireless signals.

The landmark method is used to measure a position of a mobile terminal using a known landmark transmitter.

In addition to these position location methods, various algorithms may be used to extract (analyze) location information of a mobile terminal.

Such extracted location information may be transmitted to the mobile terminal 100 through the Wi-Fi location determination server, thereby acquiring location information of the mobile terminal 100.

The mobile terminal 100 can acquire location information by being connected to at least one wireless AP. The number of wireless APs required to acquire location information of the mobile terminal 100 may be variously changed according to a wireless communication environment within which the mobile terminal 100 is positioned.

As previously described with regard to FIG. 1A, the mobile terminal may be configured to include short-range communication techniques such as Bluetooth™, Radio Frequency Identification (RFID), Infrared Data Association (IrDA), Ultra Wideband (UWB), ZigBee, Near Field Communication (NFC), Wireless USB(Wireless Universal Serial Bus), and the like.

Among others, the NFC module provided at the mobile terminal supports short-range wireless communication, which is a non-contactable type of communication between mobile terminals and generally occurs within about 10 cm. The NFC module may operate in one of a card mode, a reader mode, or a P2P mode. The mobile terminal 100 may further include a security module for storing card information, in order to operate the NFC module in a card mode. The security module may be a physical medium such as Universal Integrated Circuit Card (UICC) (e.g., a Subscriber Identification Module (SIM) or Universal SIM (USIM)), a secure micro SD and a sticker, or a logical medium (e.g., embedded Secure Element (SE)) embedded in the mobile terminal. Single Wire Protocol (SWP)-based data exchange may be performed between the NFC module and the security module.

In a case where the NFC module operates in a card mode, the mobile terminal may transmit card information on a general IC card to the outside. More specifically, if a mobile terminal having card information on a payment card (e. g, a credit card or a bus card) approaches a card reader, a short-range mobile payment may be executed. As another example, if a mobile terminal which stores card information on an entrance card approaches an entrance card reader, an entrance approval procedure may start. A card such as a credit card, a traffic card, or an entrance card may be included in the security module in the form of applet, and the security module may store card information on the card mounted therein. Card information for a payment card may include any of a card number, a remaining amount and usage history, and the like. Card information of an entrance card may include any of a user's name, a user's number (e.g., undergraduate number or staff number), an entrance history, and the like.

When the NFC module operates in a reader mode, the mobile terminal can read data from an external tag. The data received from the external tag by the mobile terminal may be coded into the NFC Data Exchange Format defined by the NFC Forum. The NFC Forum generally defines four record types. More specifically, the NFC Forum defines four Record Type Definitions (RTDs) such as smart poster, text, Uniform Resource Identifier (URI), and general control. If the data received from the external tag is a smart poster type, the controller may execute a browser (e.g., Internet browser). If the data received from the external tag is a text type, the controller may execute a text viewer. If the data received from the external tag is a URI type, the controller may execute a browser or originate a call. If the data received from the external tag is a general control type, the controller may execute a proper operation according to control content.

In some cases in which the NFC module operates in a P2P(Peer-to-Peer) mode, the mobile terminal can execute P2P communication with another mobile terminal. In this case, Logical Link Control Protocol (LLCP) may be applied to the P2P communication. For P2P communication, connection may be generated between the mobile terminal and another mobile terminal. This connection may be categorized as a connectionless mode which ends after one packet is switched, and a connection-oriented mode in which packets are switched consecutively. For a typical P2P communication, data such as an electronic type name card, address information, a digital photo and a URL, a setup parameter for Bluetooth connection, Wi-Fi connection, etc. may be switched. The P2P mode can be effectively utilized in switching data of a small capacity, because an available distance for NFC communication is relatively short.

Hereinafter, embodiments associated with a control method which can be implemented in the mobile terminal having such configuration will be described with reference to the accompanying drawings. It is obvious to those skilled in the art that the present disclosure can be specified into other particular forms without departing from the spirit and essential features of the present disclosure.

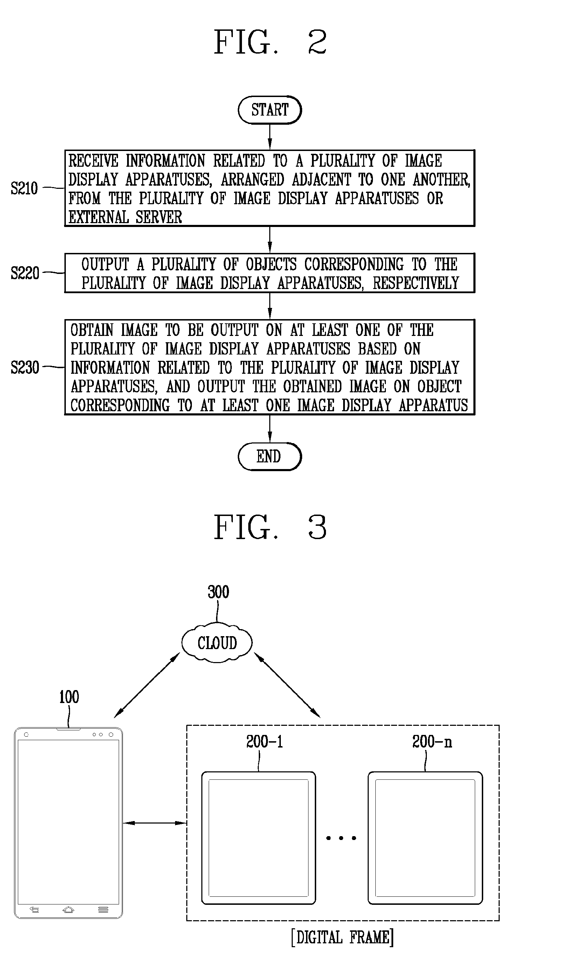

FIG. 2 is a flowchart illustrating a method for controlling a mobile terminal in accordance with the present invention.

As illustrated in FIG. 2, information related to a plurality of image display apparatuses, which are located adjacent to one another, is received from the plurality of image display apparatuses or an external server (S210).

An image display apparatus is an apparatus on which visual information can be output, and an image which is output on the image display apparatus may be set by a mobile terminal 100 according to the present invention. In an exemplary embodiment, the image display apparatus may be implemented as a digital frame which is arranged on a wall or the like to output an image thereon.

An external server may be implemented as a cloud server which performs data (or signal) transmission and reception with the image display apparatus and the mobile terminal 100. Detailed embodiment related to this will be described in FIG. 3.

Information related to the image display apparatus refers to information which is the basis for obtaining (selecting, recommending, detecting, etc.) an image to be output on the image display apparatus. For example, the information may correspond to relative locations (or a composition) of a plurality of digital frames hung on the wall, sizes of the plurality of digital frames, an image currently output on at least one of the plurality of digital frames, or the like.

Afterwards, a plurality of objects corresponding to the plurality of image display apparatuses, respectively, are output (S220).

In an exemplary embodiment, frame icons corresponding to a plurality of digital frames, respectively, may be output on the screen 151. Here, the icons may be output based on sizes or a composition of the real digital frames.

Then, an image to be output on at least one of the plurality of image display apparatuses is obtained on the basis of the information related to the plurality of image display apparatuses, and the obtained image is output on an object corresponding to the at least one image display apparatus (S230).

In an exemplary embodiment, a first digital frame and a second digital frame may be hung on a wall, and a first image may be output on the first digital frame. Accordingly, a first frame icon and a second frame icon corresponding to the first digital frame and the second digital frame, respectively, may be output on the screen 151.

In this instance, a second image including an object included in the first image may be obtained (recommended, selected, etc) as an image to be output on the second digital frame. Consequently, the first image may be output on the first frame icon and the second image may be output on the second frame icon.

Hereinafter, a detailed exemplary embodiment will be described.

In an exemplary embodiment, the step S230 may include obtaining an image to be output on at least one of the plurality of image display apparatuses, on the basis of at least one of information regarding relative locations of the plurality of image display apparatuses, size information regarding each of the plurality of image display apparatuses, information related to an image currently output on at least one of the plurality of image display apparatuses, information regarding an ambient environment in which the plurality of image display apparatuses are arranged, information related to previously-output images of the plurality of image display apparatuses.

In another exemplary embodiment, the step S230 may include obtaining an image to be output on the other (the remaining) image display apparatus, on the basis of information related to an image currently output on at least one of the plurality of image display apparatuses.

In another exemplary embodiment, the step S230 may include obtaining an image to be output on the other image display apparatus, on the basis of at least one of color information regarding an image currently output on at least one of the plurality of image display apparatuses, object information included in the image, and theme or category information preset for the image.

In another exemplary embodiment, the step S230 may include obtaining an image to be output on the other image display apparatus, in response to an input of a rule to be applied to a plurality of images output on the plurality of image display apparatuses, respectively.

In another exemplary embodiment, the step S230 may include outputting a preview image outputtable on the other image display apparatus and guide information by a rule, which is to be applied to a plurality of images output on the plurality of image display apparatuses, respectively, in response to an input of the rule .

In another exemplary embodiment, the step S230 may include obtaining an image to be output on at least one of the plurality of image display apparatuses, on the basis of at least one of a theme preset for an ambient environment in which the plurality of image display apparatuses are arranged, information related to an external device arranged in the ambient environment, and status information related to the ambient environment.

In another exemplary embodiment, the step S220 may include outputting a plurality of objects corresponding to the plurality of image display apparatuses, respectively, on the basis of at least one of information regarding relative locations of the plurality of image display apparatuses, and size information regarding each of the plurality of image display apparatuses.

In another exemplary embodiment, the step S220 may include outputting a plurality of objects corresponding to the plurality of image display apparatuses, respectively, on the basis of captured images of the plurality of image display apparatuses, strength of signals received from the plurality of image display apparatuses, and strength of signals transmitted and received among the plurality of image display apparatuses.

Hereinafter, the detailed embodiment will be described from the perspective of components.

The wireless communication unit 110 may receive information related to a plurality of image display apparatuses, which are located adjacent to one another, from the plurality of image display apparatuses or an external server.

The display unit 151 may output a plurality of objects corresponding to the plurality of image display apparatuses, respectively.

The controller 180 may obtain (recommend, select, detect, etc.) an image to be output on at least one of the plurality of image display apparatuses based on information related to the plurality of image display apparatuses and output the obtained image on an object corresponding to the at least one image display apparatus.

In an exemplary embodiment, the controller 180 may obtain an image to be output on at least one of the plurality of image display apparatuses, on the basis of at least one of information regarding relative locations of the plurality of image display apparatuses, size information regarding each of the plurality of image display apparatuses, information related to an image currently output on at least one of the plurality of image display apparatuses, information regarding an ambient environment in which the plurality of image display apparatuses are arranged, information related to previously-output images of the plurality of image display apparatuses.

In another exemplary embodiment, the controller 180 may obtain an image to be output on the other image display apparatus, on the basis of information related to an image currently output on at least one of the plurality of image display apparatuses.

In another exemplary embodiment, the controller 180 may obtain an image to be output on the other image display apparatus, on the basis of at least one of color information regarding an image currently output on at least one of the plurality of image display apparatuses, object information included in the image, and theme or category information preset for the image.

In another exemplary embodiment, the controller 180 may obtain an image to be output on the other image display apparatus, in response to an input of a rule to be applied to a plurality of images output on the plurality of image display apparatuses, respectively.

In another exemplary embodiment, the controller 180 may output a preview image outputtable on the other image display apparatus and guide information by a rule, which is to be applied to a plurality of images output on the plurality of image display apparatuses, respectively, in response to an input of the rule.

In another exemplary embodiment, the controller 180 may obtain an image to be output on at least one of the plurality of image display apparatuses, on the basis of at least one of a theme preset for an ambient environment in which the plurality of image display apparatuses are arranged, information related to an external device arranged in the ambient environment, and status information related to the ambient environment.

In another exemplary embodiment, the controller 180 may output a plurality of objects corresponding to the plurality of image display apparatuses, respectively, on the basis of at least one of information regarding relative locations of the plurality of image display apparatuses and size information regarding each of the plurality of image display apparatuses.

In another exemplary embodiment, the controller 180 may output a plurality of objects corresponding to the plurality of image display apparatuses, respectively, on the basis of captured images of the plurality of image display apparatuses, strength of signals received from the plurality of image display apparatuses, and strength of signals transmitted and received among the plurality of image display apparatuses.

In another exemplary embodiment, the controller 180 may obtain an image to be output on at least one of the plurality of image display apparatuses, in response to an input of at least one of a rule and a theme to be applied to the plurality of images to be output on the plurality of image display apparatuses, respectively.

In another exemplary embodiment, the controller 180 may obtain an image to be output on at least one of the plurality of image display apparatuses, in response to an input of a captured image by the camera 121.

FIG. 3 is a conceptual view of a system for providing a digital frame service in accordance with the present invention.

Hereinafter, an image output service provided on a mobile terminal 100 according to the present invention will be described with reference to FIG. 3. A system for providing the service may include the mobile terminal 100, a plurality of digital frames 200-1, 200-2, 200-3, ..., 200-n, and a cloud server 300.

In the following description, a random digital frame of the plurality of digital frames 200-1, 200-2, 200-3, ..., 200-n is referred to as a 'digital frame 200.'

First of all, an embodiment of an initial setup for providing the service will be described.

In detail, the digital frame 200-1 may transmit its information to the mobile terminal 100 through local networking, such as Bluetooth low energy (BLE) or WiFi. The mobile terminal 100 may then transmit the received information related to the digital frame 200-1 to the cloud server 300.

In this instance, the information related to the digital frame 200-1 may include an ID, a local network IP, a model number, sensor information such as a light sensor or a gyro sensor, a battery level and the like.

Accordingly, the cloud server 300 matches information related to the registered terminal 100 and the plurality of digital frames 200-1, 200-2, 200-3, ..., 200-n, and accordingly the setup between the digital frame 200 and the cloud server 300 is carried out.

In another exemplary embodiment, the digital frame 200 may be controlled by a control signal of the terminal 100 (i.e., local control), a control signal via the cloud server 300 (i.e., control via cloud), and a control signal generated by the digital frame 200 itself (i.e., self-control).

In detail, the local control with the mobile terminal 100 is set as a default, but the control of the digital frame 200 is carried out through a network of the mobile terminal 100 when the local control is not allowed. Also, the digital frame 200 may be remotely controlled through a cloud control. Priorities of such controls may be set in an up-to-date order. When a simultaneous operation is required, the controls may be carried out in the order of the local control, the control via cloud, and the self-control.

In a related exemplary embodiment, when a battery state (battery level) of the digital frame is less than a predetermined level, the battery of the digital frame may be charged by itself (self-control) without a separate control by a user. When fully charged, the digital frame may be restored to its original state in which it can be controlled in the local control manner. Meanwhile, the user may charge the battery of the digital frame at anytime when desired (local control), and register (set) a charging schedule in advance.

In another exemplary embodiment, the user may change an image of a digital frame using the mobile terminal 100 or a web service. In detail, the image output on the digital frame may be changed to a photo or a captured image stored in an album of the mobile terminal 100 through a local network. The image of the digital frame may also be changed using an application for providing the service through the cloud server 300.

In another exemplary embodiment, even in a disconnected state of a cloud network, a notification message is not output immediately on the mobile terminal 100. In detail, in the disconnected state of the cloud network, when an application is executed by the mobile terminal 100 or an image change is difficult at a time point that the image has to change, a notification may be output on the mobile terminal 100.

In another exemplary embodiment, images may be transferred directly through the local network, not via the cloud 300, when desiring to switch images among the plurality of digital frames 200-1, 200-2, 200-3, ..., 200-n or set an image in each digital frame. That is, the plurality of digital frames 200-1, 200-2, 200-3, ..., 200-n may directly perform signal transmission and reception together.

In the meantime, the controller 180 may output a plurality of objects corresponding to the plurality of image display apparatuses, respectively, on the basis of at least one of information related to relative locations of the plurality of image display apparatuses and size information related to each of the plurality of image display apparatuses.

In another exemplary embodiment, the controller 180 may output a plurality of objects corresponding to the plurality of image display apparatuses, respectively, on the basis of at least one of captured images of the plurality of image display apparatuses, strength of signals received from the plurality of image display apparatuses, and strength of signals transmitted and received among the plurality of image display apparatuses.

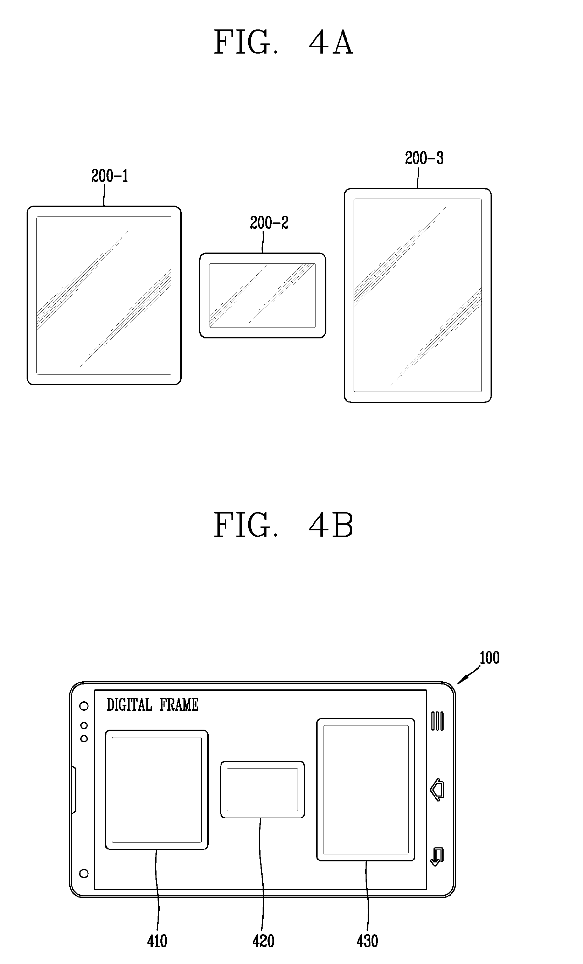

FIGS. 4A and 4B are conceptual views illustrating an exemplary embodiment of a digital frame and a frame object corresponding to the digital frame.

As illustrated in FIGS. 4A and 4B, when a first digital frame 200-1, a second digital frame 200-2 and a third digital frame 200-3 are arranged on a wall, a first frame object 410, a second frame object 420 and a third frame object 430 corresponding to the first to third digital frames 200-1, 200-2 and 200-3, respectively, may be output on the screen 151.

In this instance, the respective frame objects 410, 420 and 430 may relatively be output according to sizes, shapes and a composition of the real digital frames 200-1, 200-2 and 200-3. Also, images which are currently output or to be output on the real digital frames 200-1, 200-2 and 200-3 may be output on the frame objects 410, 420 and 430.

In an exemplary embodiment, images to be output on the digital frames 200-1, 200-2 and 200-3 may be recommended by taking into account physical states of the digital frames 200-1, 200-2 and 200-3.

In detail, such images may be recommended by considering a preset theme. For example, when a theme is set to output masterpieces on the digital frames 200-1, 200-2 and 200-3, horizontal and vertical lengths and ratios and sizes of the digital frames 200-1, 200-2 and 200-3 may be taken into account, and masterpieces having ratios and sizes similar to those information may be recommended.

Or, when a battery level of the digital frame 200 is 20% left, a dark image consuming less battery power of a display may be selected and output. For example, a dark gray color which can minimize power consumption due to a backlight of a light-emitting diode (LCD) may be selected as a color of an image.

In another exemplary embodiment, an image which is suitable for a frame (framework) of the digital frame 200 can be recommended. To this end, an inherent identification code of the framework may be recognized.

In detail, a hole sensor may be arranged at a bezel portion of the digital frame 200, and conductors, such as magnets, may be internally disposed at a framework with unique intervals. Accordingly, when the framework is attached onto the digital frame 200, an arrangement of the conductors may be recognized by the hole sensor, and thus a type of the framework attached can be recognized.

Meanwhile, the controller 180 may obtain an image to be output on at least one of the plurality of image display apparatuses, on the basis of at least one of information regarding relative locations of the plurality of image display apparatuses, size information regarding each of the plurality of image display apparatuses, information related to an image currently output on at least one of the plurality of image display apparatuses, information regarding an ambient environment in which the plurality of image display apparatuses are arranged, information related to previously-output images of the plurality of image display apparatuses.

In another exemplary embodiment, the controller 180 may obtain an image to be output on the other image display apparatus, on the basis of information related to an image currently output on at least one of the plurality of image display apparatuses.

In another exemplary embodiment, the controller 180 may obtain an image to be output on the other image display apparatus, on the basis of at least one of color information regarding an image currently output on at least one of the plurality of image display apparatuses, object information included in the image, and theme or category information preset for the image.

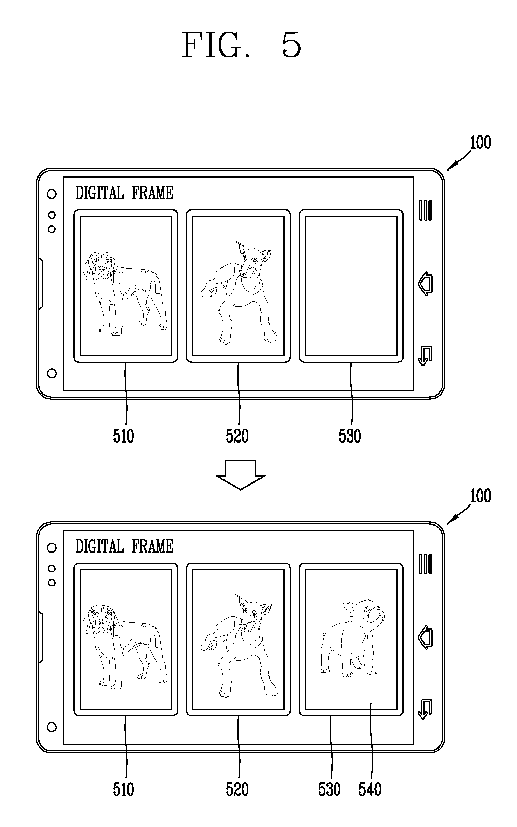

FIG. 5 is a conceptual view illustrating an embodiment of recommending an image to be output on the other digital frame on the basis of objects of images output on some digital frames.

As illustrated in FIG. 5, when a first digital frame, a second digital frame and a third digital frame are arranged on a wall or the like, a first frame object 510, a second frame object 520 and a third frame object 530 corresponding to those digital frames may be output on the screen 151.

Here, on the first frame object 510 and the second frame object 530 may be output first and second images which are currently output on the first and second digital frames. Also, an image to be output on the third digital frame may be obtained (recommended, selected, detected, etc.) based on the first and second images currently output on the first and second digital frames.

In an exemplary embodiment, when specific objects are output on the first image and the second image, a third image 540 may be obtained as an image to be output on the third digital frame. Accordingly, the third image 540 may be output on the third frame object 530.

Here, the specific object may be a specific person, building, animal, plant, thing or the like. For example, the first image, the second image and the third image 540 may include puppies.

In a continuous exemplary embodiment, when a touch input is applied to the third frame object 530 or after a lapse of a predetermined time, the third image 540 may be selected as the image to be output on the third digital frame.

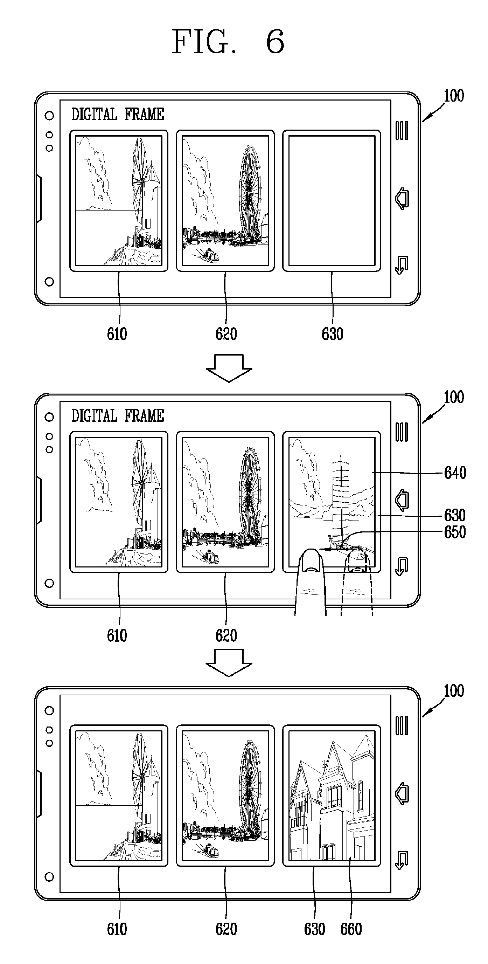

FIG. 6 is a conceptual view illustrating an embodiment of recommending an image to be output on the other (the remaining) digital frame on the basis of a category of images output on some digital frames.

As illustrated in FIG. 6, when a first digital frame, a second digital frame and a third digital frame are arranged on a wall or the like, corresponding first frame object 610, second frame object 620 and third frame object 630 may be output on the screen 151.

Here, on the first frame object 610 and the second frame object 620 may be output a first image and a second image which are currently output on the first digital frame and the second digital frame. Also, an image to be output on the third digital frame may be obtained based on the first image and the second image currently output on the first digital frame and the second digital frame.

In an exemplary embodiment, when the first image and the second image belong to a specific category, a third image 640 corresponding to the category may be obtained as the image to be output on the third digital frame. Accordingly, the third image 640 may be output on the third frame object 630.

Here, the specific category may be a style of painting or a painter for a painting image. For example, the first image, the second image and the third image 640 may be the impressionist style of paintings.

Afterwards, when a swipe or flicking input 650 is applied to the third frame object 630, a fourth image 660 corresponding to the category may be output on the third frame object 630. In this state, when a touch input is applied to the third frame object 630 or after a lapse of a predetermined time, the fourth image 660 may be selected as the image to be output on the third digital frame.

In another exemplary embodiment, when the first image and the second image have a specific color as a representative color, a third image with the color as a representative color may be obtained as the image to be output on the third digital frame. Accordingly, the third image may be output on the third frame object 630.

In this instance, a representative color may be a color mainly used in an image. Accordingly, the first image, the second image and the third image may generally be images with similar colors.

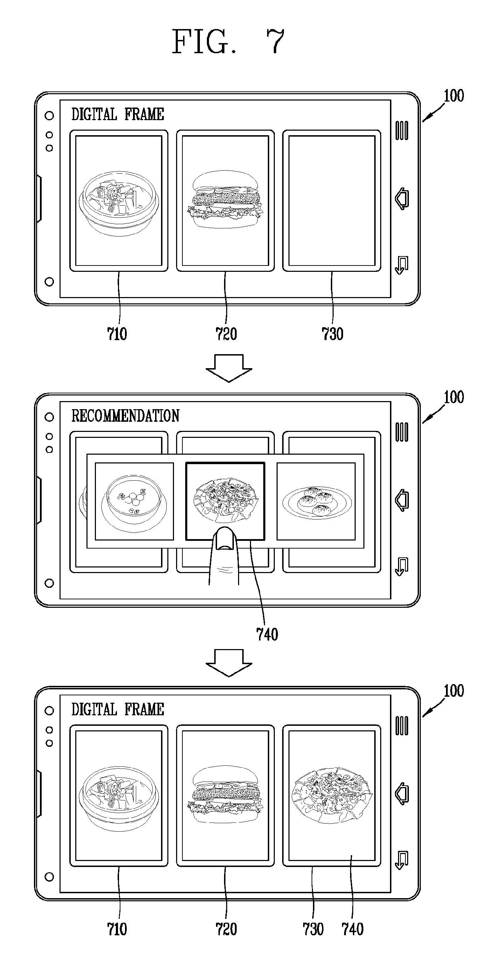

FIG. 7 is a conceptual view illustrating an embodiment of recommending an image to be output on the other digital frame on the basis of a theme of images output on some digital frames.

As illustrated in FIG. 7, when a first digital frame, a second digital frame and a third digital frame are arranged on a wall or the like, corresponding first frame object 710, second frame object 720 and third frame object 730 may be output on the screen 151.

Here, on the first frame object 710 and the second frame object 730 may be output a first image and a second image which are currently output on the first digital frame and the second digital frame. Also, an image to be output on the third digital frame may be obtained based on the first image and the second image currently output on the first digital frame and the second digital frame.

In an exemplary embodiment, when the first image and the second image belong to a specific theme, a plurality of images corresponding to the theme may be obtained as the image to be output on the third digital frame.

As a result, a popup window including the plurality of images may be output as an upper layer or on one region without overlapping the first image and the second image.

In this instance, the specific theme may be an object such as a person or a thing, or may variously be defined as a travel, a season, weather and the like. For example, the plurality of images may be images associated with foods.

Then, when a touch input is applied to a third image 740 of the plurality of images, the third image 740 may be selected as the image to be output on the third digital frame. Accordingly, the third image 740 may be output on the third frame object 730.

In the meantime, the controller 180 may obtain (recommend or select) an image to be output on the other (or the remaining) image display apparatus, in response to an input of a rule to be applied to a plurality of images output on the plurality of image display apparatuses, respectively.

In another exemplary embodiment, the controller 180 may output a preview image which is outputtable on the remaining image display apparatus and guide information according to a rule which is to be applied to a plurality of images output on the plurality of image display apparatuses, respectively, in response to an input of the rule.

In another exemplary embodiment, the controller 180 may obtain an image to be output on at least one of the plurality of image display apparatuses, in response to an input of at least one of a rule and a theme to be applied to a plurality of images output on the plurality of image display apparatuses, respectively.

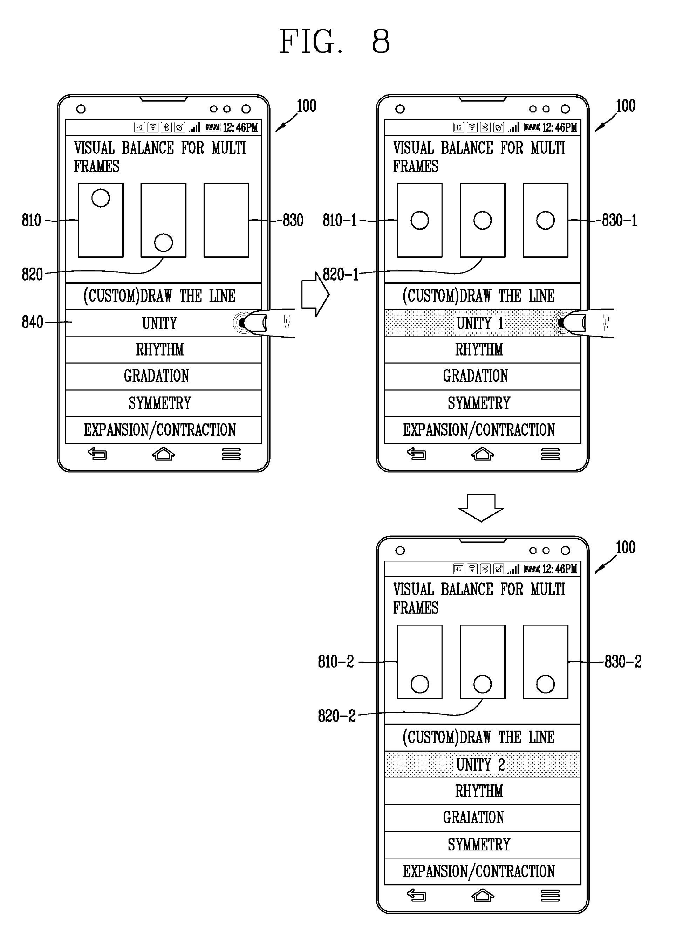

FIG. 8 is a conceptual view illustrating an embodiment of selecting a design principle to be applied to an image of a digital frame.

As illustrated in FIG. 8, when a first digital frame, a second digital frame and a third digital frame are arranged on a wall or the like, corresponding first frame object 810, second frame object 820 and third frame object 830 may be output on the screen 151.

In this instance, on the first frame object 810 and the second frame object 820 may be output a first figure image and a second figure image which are currently output on the first digital frame and the second digital frame. Also, a figure image to be output on the third digital frame may be obtained based on the first figure image and the second figure image currently output on the first digital frame and the second digital frame, and an input design principle.

To this end, menus corresponding to a design principle (rules) for obtaining (selecting, recommending, detecting, etc.) the figure image to be output on the third digital frame may be output on the third digital frame, and the menus may include unity, rhythm, gradation, symmetry, expansion, contraction, draw the line and the like.

In an exemplary embodiment, when a touch input is applied to a unity menu 840, figure images 810-1, 820-1 and 830-1 to which a unity principle has been applied may be output on the frame objects 810, 820 and 830. For example, circles with the same size may be output at centers of the respective frame object 810, 820 and 830.

Afterwards, when a touch input is applied to the unity menu 840 again, different figure images 810-2, 820-2 and 830-2 to which the unity principle has been applied may be output on the respective frame objects 810, 820 and 830. For example, circles with the same size may be output at lower portions of the respective frame objects 810, 820 and 830.

That is, when a touch input is applied to the unity menu 840 several times, new images to which the unity principle has been applied may be output.

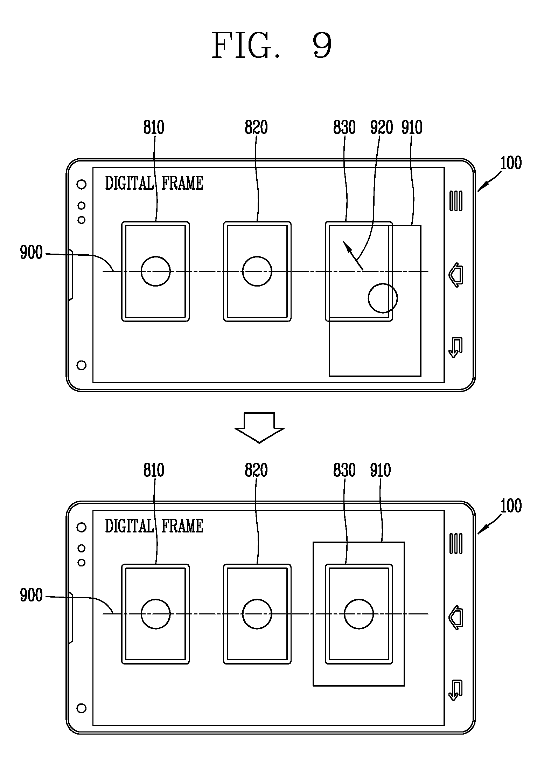

FIG. 9 is a conceptual view illustrating an embodiment in which a design principle of unity is applied to an image of a digital frame.

As illustrated in FIG. 9, when the first digital frame, the second digital frame and the third digital frame are arranged on the wall or the like, as described in FIG. 8, the corresponding first frame object 810, second frame object 820 and third frame object 830 may be output on the screen 151.

In this instance, on the first frame object 810 and the second frame object 820 may be output a first figure image and a second figure image which are currently output (or to be output) on the first digital frame and the second digital frame. Also, a figure image to be output on the third digital frame may be obtained based on the first figure image and the second figure image currently output on the first digital frame and the second digital frame, and an input design principle.

In an exemplary embodiment, a center point and a size of a main object included in each of the first figure image and the second figure image may be detected and a selected design principle may be applied to adjust a size of a figure image to be output on the third frame object or move the figure image.

To this end, menus corresponding to design principles (rules) for obtaining the figure image to be output on the third digital frame may be output, and the menus may include unity, rhythm, gradation, symmetry, expansion, contraction, draw the line and the like.

In an exemplary embodiment, when a touch input is applied to the unity menu, a guide line 900 provided based on the unity principle and an original image 910 to be output on the third digital frame may be output.

In detail, when circles of the same size are output on centers of the first and second frame objects 810 and 820, a guide line passing centers of the circles and the original image 910 including a circle of the same size as those circles may be output.

Also, in order for a center of the circle included in the original image 910 to be placed on the guide line 900, a direction 920 for adjusting a location of the original image 910 may be output.

In an exemplary embodiment, when a preset touch input is applied, the center of the circle included in the original image 910 may be aligned to pass the guide line 900.

In another exemplary embodiment, a drag input may be applied to the original image 910 along the direction 920 such that the circle included in the original image 910 can be set to pass the guide line 900.

Accordingly, the principle of the unity can be applied to the respective frame objects 810, 820 and 830 such that the circles of the same size can be output at the center of the frame. That is, a center point and a size of a main object included in each of the first figure image and the second figure image may be detected and the principle of the unity may be applied, so as to adjust a size of a figure image to be output on the third frame object or move the figure image.

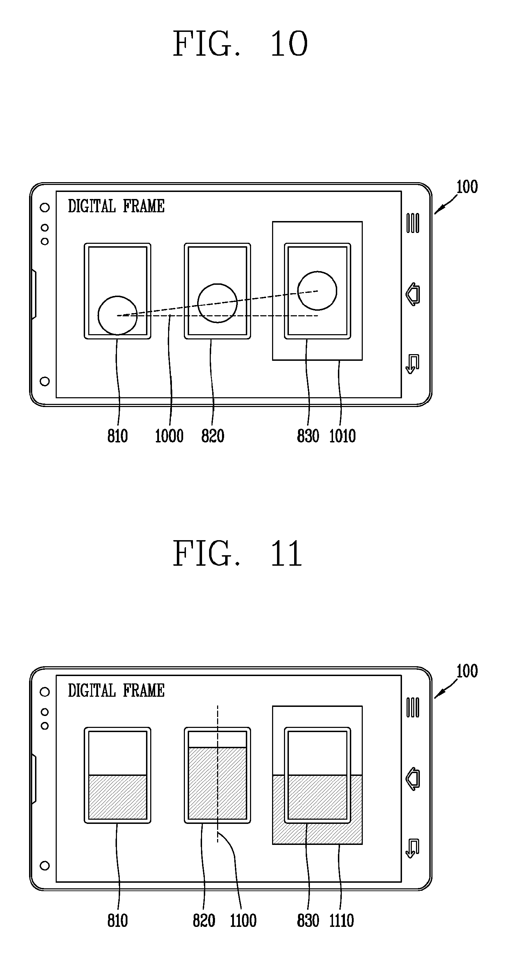

FIG. 10 is a conceptual view illustrating an embodiment in which a design principle of gradation is applied to an image of a digital frame.

As illustrated in FIG. 10, when the first digital frame, the second digital frame and the third digital frame are arranged on the wall or the like, as described in FIG. 8, the corresponding first frame object 810, second frame object 820 and third frame object 830 may be output on the screen 151.

In this instance, on the first frame object 810 and the second frame object 820 may be output a first figure image and a second figure image which are currently output (or to be output) on the first digital frame and the second digital frame. Also, a figure image to be output on the third digital frame may be obtained based on the first figure image and the second figure image output on the first digital frame and the second digital frame, and an input design principle.

In an exemplary embodiment, a center point and a size of a main object included in each of the first figure image and the second figure image may be detected and a selected design principle may be applied to adjust a size of a figure image to be output on the third frame object or move the figure image.

To this end, menus corresponding to design principles (rules) for obtaining the figure image to be output on the third digital frame may be output, and the menus may include unity, rhythm, gradation, symmetry, expansion, contraction, draw the line and the like.

In an exemplary embodiment, when a touch input is applied to the gradation menu, a guide line 1000 provided based on the gradation principle and an original image 1010 to be output on the third digital frame may be output.

In detail, when circles of the same size are output on the first and second frame objects 810 and 820, the guide line 1000 with respect to a tilt (arranged angle) formed by the circles, and the original image 1010 including a circle of the same size as those circles may be output.

In an exemplary embodiment, when a preset touch input is applied, the circle included in the original image 1010 may be aligned to pass the guide line 1000.

In another exemplary embodiment, a drag input may be applied to the original image 1010 such that the circle included in the original image 1010 can be set to pass the guide line 1000.

Accordingly, the gradation principle may be applied to each of the frame object 810, 820 and 830 such that the circles of the same size and with the specific tilt (arranged angle) can be output. That is, a center point and a size of a main object included in each of the first figure image and the second figure image may be detected and the principle of the gradation may be applied to adjust a size of a figure image to be output on the third frame object or move the figure image.

FIG. 11 is a conceptual view illustrating an embodiment in which a design principle of symmetry is applied to an image of a digital frame.

As illustrated in FIG. 11, when the first digital frame, the second digital frame and the third digital frame are arranged on the wall or the like, as described in FIG. 8, the corresponding first frame object 810, second frame object 820 and third frame object 830 may be output on the screen 151.

In this instance, on the first frame object 810 and the second frame object 820 may be output a first figure image and a second figure image which are currently output (or to be output) on the first digital frame and the second digital frame. Also, a figure image to be output on the third digital frame may be obtained based on the first figure image and the second figure image output on the first digital frame and the second digital frame, and an input design principle.

In an exemplary embodiment, a center point and a size of a main object included in each of the first figure image and the second figure image may be detected and a selected design principle may be applied to adjust a size of a figure image to be output on the third frame object or move the figure image.

To this end, menus corresponding to design principles (rules) for obtaining the figure image to be output on the third digital frame may be output, and the menus may include unity, rhythm, gradation, symmetry, expansion, contraction, draw the line and the like.

In an exemplary embodiment, when a touch input is applied to the symmetry menu, a guide line 1100 provided based on the principle of the symmetry and an original image 1110 to be output on the third digital frame may be output.

In detail, when lines with different heights dividing the screen are output on the first and second frame objects 810 and 820, the guide line 1100 corresponding to a reference line of the principle of the symmetry and the original image 1110 including a straight line may be output.

In an exemplary embodiment, when a preset touch input is applied, the straight line included in the original image 1110 may be aligned to be symmetrical with the lines with different heights based on the guide line 1100.

In another exemplary embodiment, a drag input may be applied to the original image 1110, such that the straight line included in the original image 1110 can be set to be symmetrical to the straight lines with the different heights based on the guide line 1100.

Accordingly, the principle of the symmetry may be applied to each of the frame objects 810, 820 and 830 and accordingly the straight line dividing the screen can be output. That is, a center point and a size of a main object included in each of the first figure image and the second figure image may be detected and the principle of the symmetry may be applied to adjust a size of a figure image to be output on the third frame object or move the figure image.

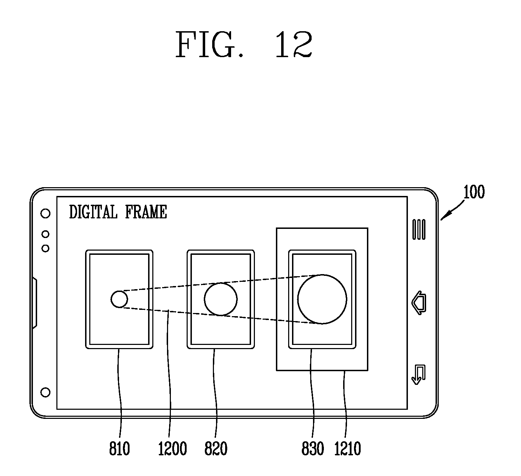

FIG. 12 is a conceptual view illustrating an embodiment in which a design principle of expansion is applied to an image of a digital frame.

As illustrated in FIG. 12, when the first digital frame, the second digital frame and the third digital frame are arranged on the wall or the like, as described in FIG. 8, the corresponding first frame object 810, second frame object 820 and third frame object 830 may be output on the screen 151.

In this instance, on the first frame object 810 and the second frame object 820 may be output a first figure image and a second figure image which are currently output (or to be output) on the first digital frame and the second digital frame. Also, a figure image to be output on the third digital frame may be obtained based on the first figure image and the second figure image output on the first digital frame and the second digital frame, and an input design principle.

In an exemplary embodiment, a center point and a size of a main object included in each of the first figure image and the second figure image may be detected and a selected design principle may be applied to adjust a size of a figure image to be output on the third frame object or move the figure image.

To this end, menus corresponding to design principles (rules) for obtaining the figure image to be output on the third digital frame may be output, and the menus may include unity, rhythm, gradation, symmetry, expansion, contraction, draw the line and the like.

In an exemplary embodiment, when a touch input is applied to the expansion menu, a guide line 1200 provided based on the principle of the expansion and an original image 1210 to be output on the third digital frame may be output.

In detail, when a second circle, whose size is more increased by 20% than a size of a first circle output on the first frame object 810, is output on the second frame object 820, a guide line 1200 for outputting a third circle, whose size is more increased by 20% than the size of the second circle, on the third frame object 830, and the original image 1210 including a circle may be output.

In an exemplary embodiment, when a preset touch input is applied, the size of the original image 1210 may be adjusted such that the size of the circle included in the original image 1210 can be fit with the guide line 1200.

In another exemplary embodiment, a pinch-in or pinch-out input may be applied to the original image 1210 to reduce or increase the size of the original image 1210, such that the circle included in the original image 1210 can be fit with the guide line 1200.

Accordingly, the principle of the expansion may be applied to each of the frame objects 810, 820 and 830, such that the circles whose sizes are gradually increased can be output. That is, a center point and a size of a main object included in each of the first figure image and the second figure image may be detected and the principle of the expansion may be applied to adjust a size of a figure image to be output on the third frame object or move the figure image.

In a similar exemplary embodiment, the principle of the contraction may be applied to each of the frame objects 810, 820 and 830 such that circles whose sizes are gradually reduced can be output. That is, a center point and a size of a main object included in each of the first figure image and the second figure image may be detected and the principle of the contraction may be applied to adjust a size of a figure image to be output on the third frame object or move the figure image.

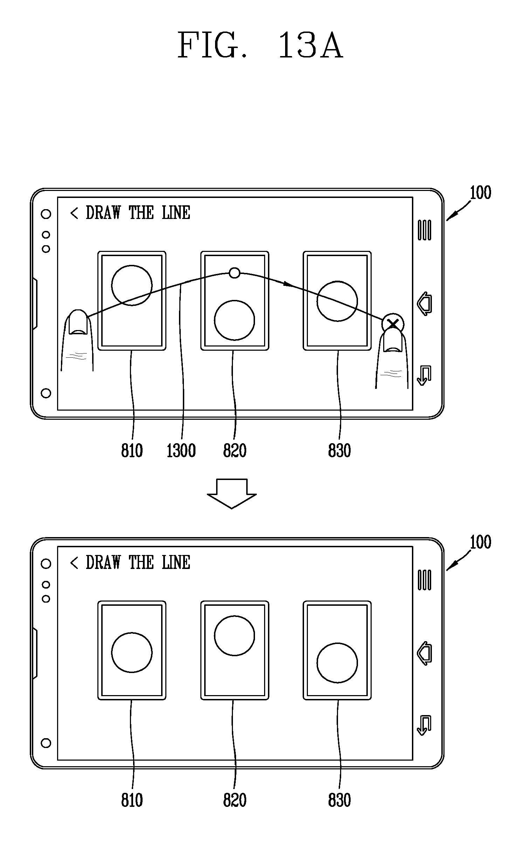

FIGS. 13A to 13C are conceptual views illustrating an embodiment related to a direct setup of an image composition.

As illustrated in FIG. 13A, when a first digital frame, a second digital frame and a third digital frame are arranged on a wall or the like, corresponding first frame object 810, second frame object 820 and third frame object 830 may be output on the screen 151.

In this instance, currently-output figure images may be output on the frame objects 810, 820 and 830, respectively. In an exemplary embodiment, circles of the same size may be output on the frame objects 810, 820 and 830 at different locations, respectively.

Referring back to FIG. 8, menus corresponding to design principles (rules) for obtaining a figure image to be output on the third frame object, and the menus may include unity, rhythm, gradation, symmetry, expansion, contraction, draw the line and the like.

In an exemplary embodiment, when an input of drawing a specific line 1300 is applied after a touch input is applied to the 'Draw the line' menu, centers of the circles of the same size, output on the respective frame objects 810, 820 and 830, may be arranged to pass the specific line 1300.

In another exemplary embodiment, a user may rearrange locations of the arranged circles by applying an input of drawing another specific line again, or draw a plurality of composition lines.

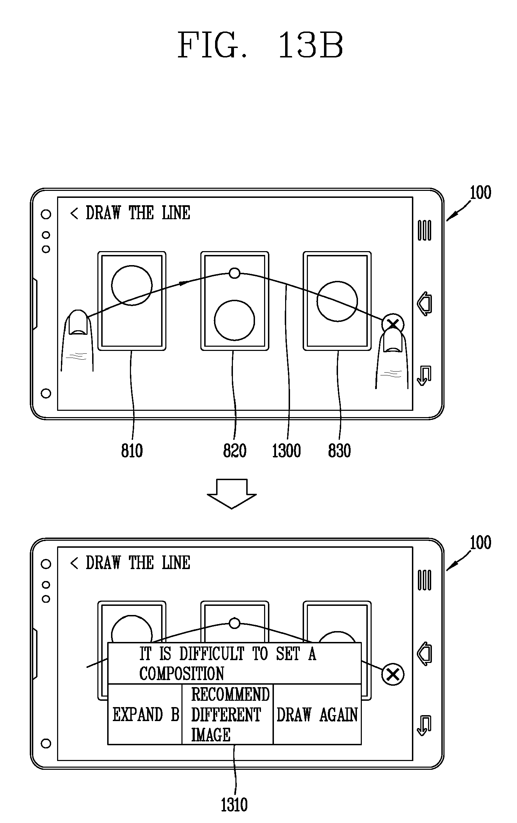

Referring to FIG. 13B, when figures cannot be arranged along the specific line 1300 input by the user, a message popup window 1310 notifying this may be output.

In an exemplary embodiment, when an image deterioration is caused during image retouching or it is impossible to set a composition, the message popup window 1310 notifying this may be output.

In detail, the popup window 1310 may output thereon selectable menus along with a message notifying the difficulty in setting the composition. In an exemplary embodiment, the popup window 1310 may include menus, such as an image expansion for setting a composition, a recommendation of another image, drawing a line again, and the like.

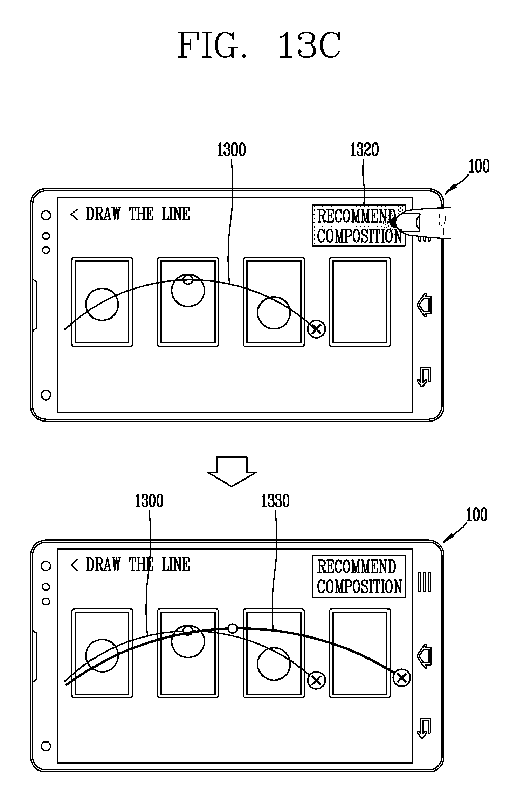

Referring to FIG. 13C, as similar to FIG. 13A, when an input of drawing the specific line 1300 is applied after applying a touch input to the 'Draw the line' menu, centers of circles of the same size, output on the respective frame objects 810, 820 and 830, may be arranged to pass the specific line 1300.

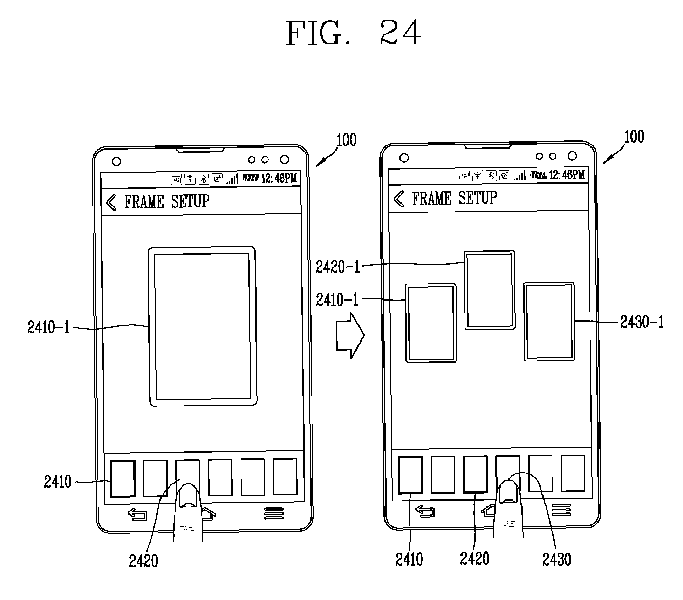

Afterwards, a fourth frame object 1340 corresponding to a fourth digital frame may be additionally output. In an exemplary embodiment, the fourth frame object 1340 may additionally be output, in response to a signal transmitted from the fourth digital frame or a user selection. An exemplary embodiment of adding a frame object will be described again later with reference to FIG. 24.

When a touch input is then applied to the composition recommend menu 1320, a new line 1330 for applying the composition set by the user-drawn line 1300 in FIG. 13A even to the newly-added fourth frame object 1340 may be output.

The user can select the composition by applying a touch input to the new line 1330 or set a new composition by drawing another line.

Meanwhile, the user may select some of a plurality of digital frames and edit or change an image output on the selected digital frame.

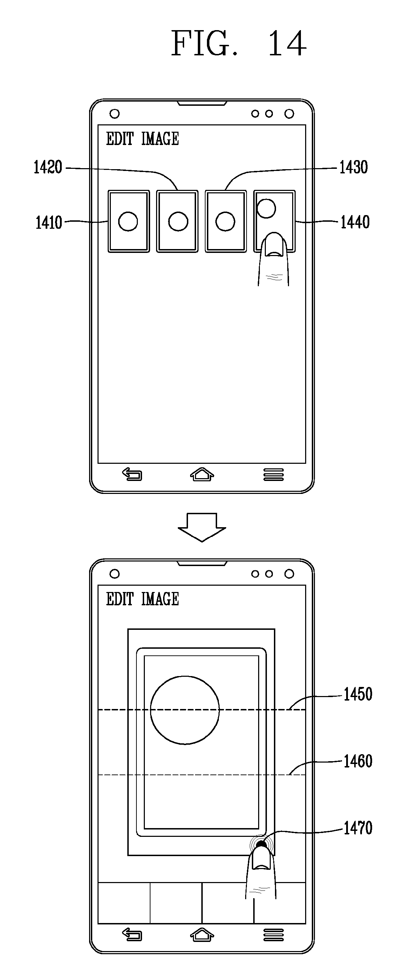

FIG. 14 is a conceptual view illustrating an embodiment of editing an image to be output on a digital frame.

As illustrated in FIG. 14, when a first digital frame, a second digital frame, a third digital frame and a fourth digital frame are arranged on a wall or the like, corresponding first frame object 1410, second frame object 1420, third frame object 1430 and fourth frame object 1440 may be output on the screen 151. Also, images which are currently output on the digital frames may be output on the frame objects 1410, 1420, 1430 and 1440, respectively.

Here, when a preset touch input is applied to the fourth frame object, a screen for editing an image output on the fourth frame object may be output.

In an exemplary embodiment, when the unity is selected as the design principle to edit, guide lines 1450 and 1460 for achieving unity with circles of the same size, output on the other frame objects 1410, 1420 and 1430, may be output.

Accordingly, a touch input 1470 or a drag input may be applied to output a circle of the same size between the guide lines 1450 and 1460.

In another exemplary embodiment, a size of an image to be output on the fourth frame object may be edited by applying a pinch-in or pinch-out input. In detail, the size of the image may be reduced when the pinch-in input is applied, and on the other hand may be increased when the pinch-out input is applied.

In another exemplary embodiment of selecting a frame object for image change, a touch input may be applied to a pin which is output on each frame object.

In detail, a pin which seems to fix a frame may be output on a framework portion of each frame object. When a drag input is applied to the pin of the first frame object, the pin may disappear from the framework, and an image which exhibits harmony with images output on the other digital frames may be recommended to the first digital frame.

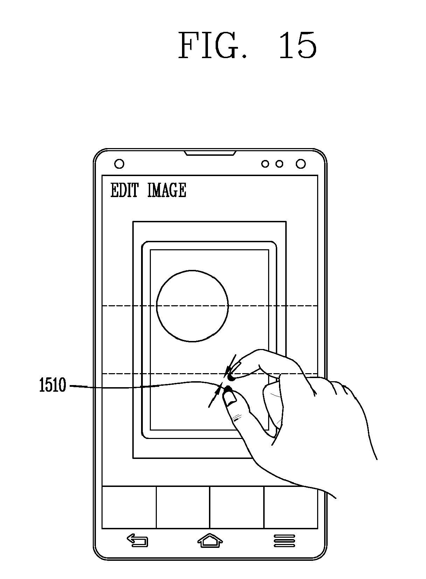

FIG. 15 is a conceptual view illustrating an embodiment of a touch input for returning to an initial screen in FIG. 14.

As illustrated in FIG. 15, when a preset touch input is applied to the fourth frame object, as described in FIG. 14, a screen for editing an image output on the fourth frame object may be output.

When a pinch-in input 1510 is applied after completion of the image edition, the initial screen on which the frame objects 1410, 1420, 1430 and 1440 were output may be output again. In this instance, the edited image may be output on the fourth frame object 1440.

Meanwhile, the controller 180 may obtain an image to be output on at least one of the plurality of image display apparatuses, based on an input of a captured image by a camera.

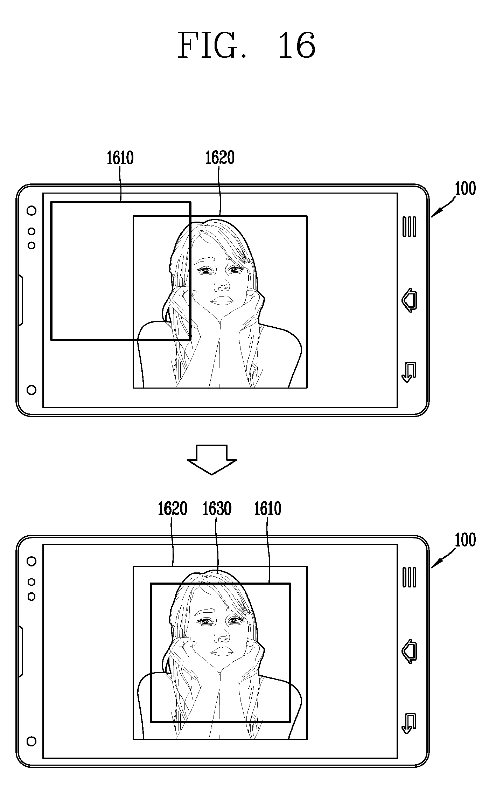

FIG. 16 is a conceptual view illustrating an embodiment of editing a portrait to be output on a digital frame.

As illustrated in FIG. 16, an image 1620 which is captured by the camera 121 may be loaded as an image to be output on a first digital frame. Accordingly, a first frame object 1610 corresponding to the first digital frame and the captured image 1620 of a person 1630 may be output.

In an exemplary embodiment, a location of a person may be adjusted by a head room and a lead room with respect to the person. Accordingly, the location of the person 1630 within the first digital frame can be set.

In another exemplary embodiment, a size of an image may be adjusted based on a long side of horizontal and vertical sides of a digital frame. In detail, a size of a portrait image may be adjusted based on the vertical side and a size of a landscape image may be adjusted based on the horizontal side.

The embodiment of FIG. 16 illustrates a captured image but may not be limited to this. That is, the editing method may also be applied to a downloaded image or the like.

Meanwhile, the controller 180 may obtain an image to be output on at least one of the plurality of image display apparatuses, on the basis of at least one of a theme preset for an ambient environment in which the plurality of image display apparatuses are arranged, information related to an external device arranged in the ambient environment, and status information related to the ambient environment.

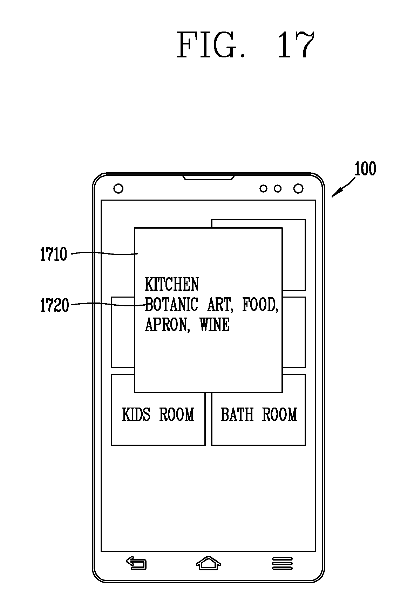

FIG. 17 is a conceptual view illustrating an embodiment of setting a theme according to a surrounding space.

As illustrated in FIG. 17, a theme associated with a place where a digital frame is installed (hung) may be set. In an exemplary embodiment, several menus corresponding to the place may be output. A popup window 1710 for inputting a theme associated with a kitchen may be output when a kitchen-related menu is selected. Accordingly, a user may input themes 1720, such as botanic art, food, apron, wine and the like.

As a result, when a digital frame on which a picture of a family is output is moved from a living room to a kitchen, an image corresponding to one of the preset themes, such as botanic art, food, apron, wine and the like, may be output.

In another exemplary embodiment, a part of an original image which corresponds to a moved location of a digital frame may be output. In detail, for a large original image, a part of the original image corresponding to a location where a digital frame is placed may be output according to the placed position of the digital frame. This may allow the part of the original image to be viewable in detail.

In another exemplary embodiment, when an external device is present along with a digital frame within a preset range, an image may be output regarding this situation. In detail, when a speaker is present near a digital frame, an image content combined with a voice may be output.

Or, when a TV is present near a digital frame, an image suitable for a content which is currently executed on the TV may be output on the digital frame. For example, when a sports game is broadcasted on the TV, a logo of a cheering team may be output on the digital frame. On the other hand, when a movie is broadcasted on the TV, a movie poster or the like may be output on the digital frame.

Meanwhile, the digital frame 200 should bring analog sensitivity as a frame in everyday life. However, a situation that an error has to be transferred or notified, such as an occurrence of a network error, a low battery level, an inclined arrangement or the like, inevitably happens.

However, if such erroneous situations are indicated on the digital frame 200 every time the situations bring about, the analog value is lowered. Also, if such situation is metaphorically notified (e.g., lighting, sound, etc.), inconvenience in having to learn new interfaces is caused.

Hence, an error message and a guide may selectively be provided by distinguishing a case where the digital frame 200 serves as an everyday object and a case where the digital frame 200 serves as a device.

In an exemplary embodiment, a guide may be provided only when a user approaches the digital frame 200 with turning on a notification screen of the mobile terminal 100. Or, a notification associated with the digital frame 200 may be output only when a specific portion of the digital frame 200 is touched by a hand.

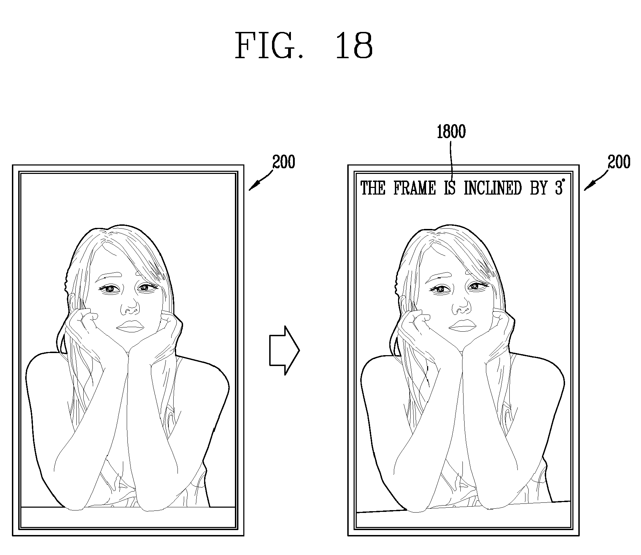

FIG. 18 is a conceptual view illustrating an embodiment of outputting a message notifying that a digital frame has been inclined.

As illustrated in FIG. 18, when a framework of the digital frame 200 is touched by a hand, a message 1800 notifying that the digital frame 200 has been inclined by a predetermined angle may be output. Also, a reference line for adjusting (fitting) the inclined digital frame may be output.

Meanwhile, a retractable charger for charging the digital frame 200 may be disposed at a lower portion of the digital frame 200.

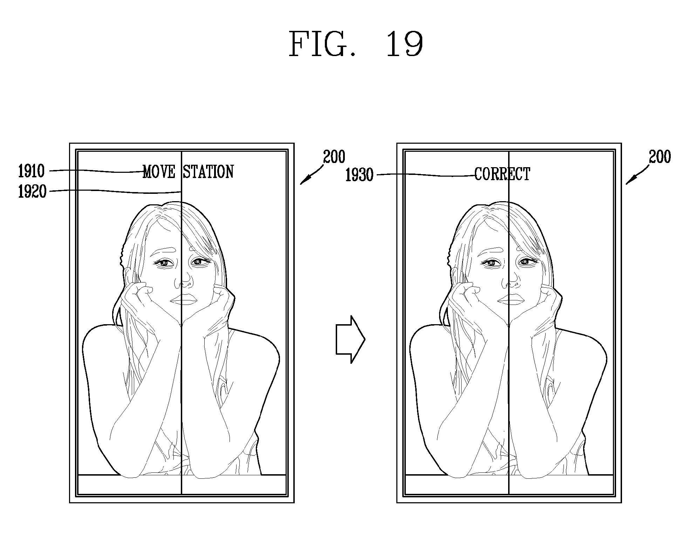

FIG. 19 is a conceptual view illustrating an embodiment of outputting a message associated with a charger on a digital frame.

As illustrated in FIG. 19, when a framework of the digital frame 200 is touched by a hand, a message 1910 requesting for a movement of a charging station and a guide line 1920 for a location of the charging station may be output.

Accordingly, when the location of the charging station is moved, a message 1930 notifying that the location of the charging station has correctly been set may be output.

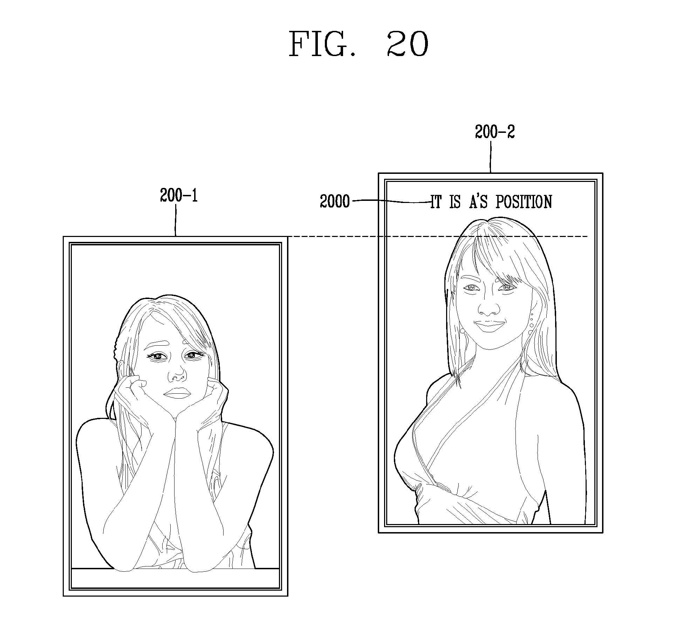

FIG. 20 is a conceptual view illustrating an embodiment of outputting a location of a digital frame on another digital frame.

As illustrated in FIG. 20, when a first digital frame 200-1 and a second digital frame 200-2 are all hung, guide information indicating relative locations of the frames 200-1 and 200-2 may be output.

In an exemplary embodiment, a framework of the second digital frame 200-2 is touched by a hand, guide information 2000 notifying a height of the first digital frame 200-1 may be output on the second digital frame 200-2.

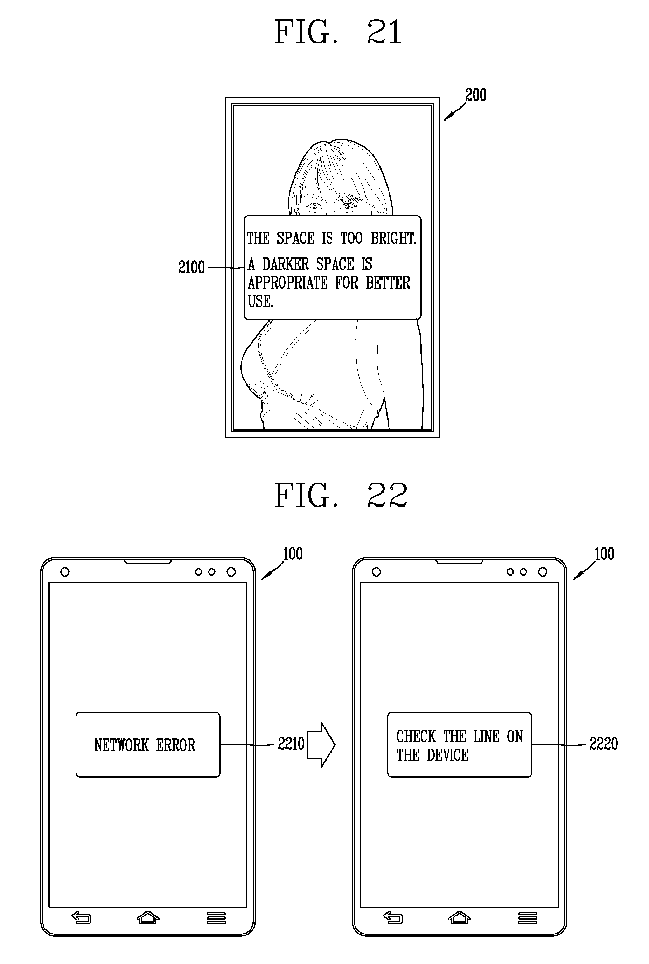

FIG. 21 is a conceptual view illustrating an embodiment of outputting a message notifying inappropriate brightness on a digital frame.

As illustrated in FIG. 21, when a framework of the digital frame 200 is touched by a hand, a message 2100 notifying a difficulty in outputting an image due to an excessively-bright space may be output.

In an exemplary embodiment, a message proposing to move the digital frame 200 to another place may be output when it is determined that an output of an image is difficult even at full brightness, when it is worried about damage on the digital frame 200 due to an increase in temperature, or the like.

FIG. 22 is a conceptual view illustrating an embodiment of outputting a network error message on a terminal.

As illustrated in FIG. 22, in an unstable state of a communication network connection between the digital frame 200 and the mobile terminal 100, a popup window 2210 notifying this may be preferentially output on the mobile terminal 100.

Afterwards, when the mobile terminal 100 approaches the digital frame 200, a network error message may also be output on the digital frame 200. Also, when the error message is clicked (touched), guide information for solving the network error may be output.

In an exemplary embodiment, when a connection line of the digital frame 200 has a problem, a popup window 2220 for requesting the user to check the connection line of the digital frame 200 may be output on both of the mobile terminal 100 and the digital frame 200. In detail, a location of the connection line may be output as guide information on the digital frame 200.

Hereinafter, an exemplary embodiment of selecting a digital frame to be controlled in the mobile terminal 100 from a plurality of digital frames will be described.

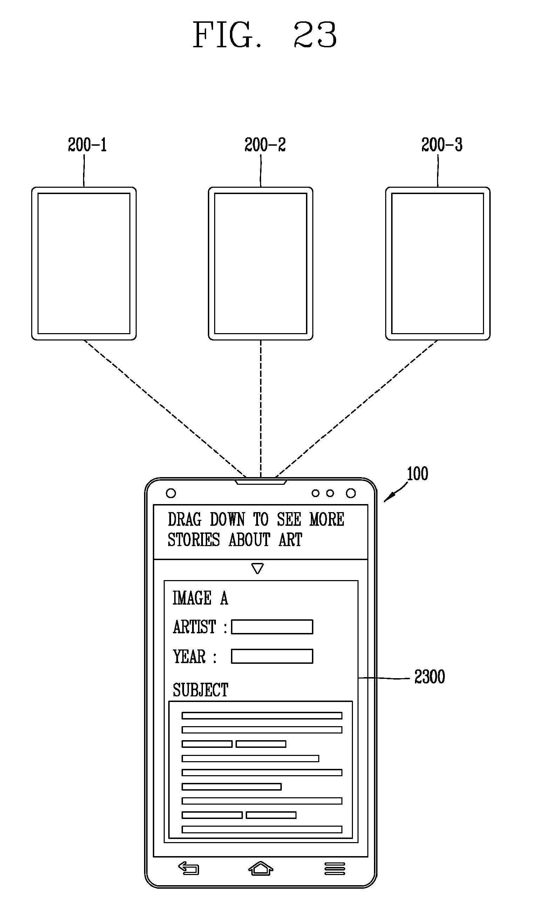

FIG. 23 is a conceptual view illustrating an embodiment of recognizing relative locations of digital frames and outputting information related to the recognized locations.

As illustrated in FIG. 23, distances between each of a plurality of digital frames 200-1, 200-2 and 200-3 and the mobile terminal 100, an order and positions that the plurality of digital frames 200-1, 200-2 and 200-3 are hung on a wall or the like may be detected, and related information may be output.

In an exemplary embodiment, the distances between the plurality of digital frames 200-1, 200-2 and 200-3 and the mobile terminal 100 may be obtained using a beacon.

In detail, when the digital frames 200-1, 200-2 and 200-3 are connected to the terminal 100 by receiving WiFi and a password through Bluetooth low energy (BLE), the digital frames 200-1, 200-2 and 200-3 may be registered in the order of signal strength thereof. Or, the digital frames 200-1, 200-2 and 200-3 may be registered through NFC tagging.

In another exemplary embodiment, when a wall or the like on which the plurality of digital frames 200-1, 200-2 and 200-3 are arranged is directly captured, an image registered on each frame may be tagged, which may allow for identifying each frame. In this instance, the captured image may be stored and viewed as a registered frame image (illust), other than an actually-captured image.

In another exemplary embodiment, frame IDs of and distances from neighboring frames may be detected by distance sensors attached to the plurality of digital frames 200-1, 200-2 and 200-3.

Accordingly, the order that the plurality of digital frames 200-1, 200-2 and 200-3 are hung on the wall or the like can be obtained.

In another exemplary embodiment, when the mobile terminal 100 is moved close to the first digital frame 200-1 within a preset distance range, a popup window 2300 including information related to an image currently output on the first digital frame 200-1 may be output.

In another exemplary embodiment, when a flicking or swipe input is applied to the popup window 2300, information related to an image currently output on the second digital frame 200-2 which is hung next to the first digital frame 200-1 may be output.

In another exemplary embodiment, a location of the second digital frame 200-2 and a location of the third digital frame 200-3 may be switched with each other. Accordingly, when a flicking or swipe input is applied to the popup window 2300, information related to an image currently output on the third digital frame 200-3 which is hung next to the first digital frame 200-1 may be output.

FIG. 24 is a conceptual view illustrating an embodiment of selecting a digital frame to which a control signal is to be transmitted.

As illustrated in FIG. 24, a digital frame for which an image output thereon is controlled may be selected from a plurality of digital frames.

In an exemplary embodiment, when a touch input is applied to a first icon 2410 corresponding to a first digital frame, a first frame object 2410-1 corresponding to the first digital frame may be output.

Afterwards, when a touch input is applied to a second icon 2420 corresponding to a second digital frame, a second frame object 2420-1 corresponding to the second digital frame may be output. Similarly, when a touch input is applied to a third icon 2430 corresponding to a third digital frame, a third frame object 2430-1 corresponding to the third digital frame may be output.

That is, a digital frame for which an image output thereon is to be controlled may be selected in response to a touch input, and a frame object corresponding to the selected digital frame may be output on the screen 151 to correspond to a real size, location and arrangement.

Effects provided in a mobile terminal and a method of controlling the same according to the present invention will be described hereinafter.

In accordance with at least one of embodiments of the present invention, an output image of a frame arranged on a wall or the like can be changed without changing a frame.

In accordance with at least one of embodiments of the present invention, an image regarding harmony with the other digital frames can be recommended.

The present disclosure can be implemented as computer-readable codes in a program-recorded medium. The computer-readable medium may include all types of recording devices each storing data readable by a computer system. Examples of such computer-readable media may include hard disk drive (HDD), solid state disk (SSD), silicon disk drive (SDD), ROM, RAM, CD-ROM, magnetic tape, floppy disk, optical data storage element and the like. Also, the computer-readable medium may also be implemented as a format of carrier wave (e.g., transmission via an Internet). The computer may include the controller 180 of the mobile terminal. Therefore, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal, comprising:
a wireless communication unit (110);
a display (151); and
a controller (180) configured to:
receive first information, via the wireless communication unit, related to a plurality of adjacently arranged image display apparatuses (200-1, ...200-n), wherein the information is received from the plurality of image display apparatuses or from an external server (300);
cause the display to display a plurality of objects respectively corresponding to the plurality of image display apparatuses;
obtain an image to be displayed on at least one of the plurality of image display apparatuses based on the first information; and
cause the display to display the obtained image on the object corresponding to the at least one image display apparatus.

2. The terminal of claim 1, wherein the first information comprises at least one of information of relative locations of the plurality of image display apparatuses, size information regarding each of the plurality of image display apparatuses, information related to an image currently displayed by at least one of the plurality of image display apparatuses, information regarding an ambient environment in which the plurality of image display apparatuses are arranged, or information related to previously-displayed images of the plurality of image display apparatuses.

3. The terminal of claim 1 or 2, wherein the controller is further configured to:
obtain an image to be displayed on another one of the plurality of image display apparatuses based on the information related to the image currently displayed on at least one of the plurality of image display apparatuses.

4. The terminal of any one of the claims 1 to 3, wherein the controller is further configured to:
obtain the image to be displayed on the another one of the plurality of image display apparatuses based on at least one of color information regarding the image currently displayed on at least one of the plurality of image display apparatuses, object information included in the image currently displayed on at least one of the plurality of image display apparatuses, or theme or category information preset for the image currently displayed on at least one of the plurality of image display apparatuses.

5. The terminal of any one of the claims 1 to 4, wherein the controller is further configured to:
obtain the image in response to an input of a rule to be applied to a plurality of images to be respectively displayed on the plurality of image display apparatuses.

6. The terminal of any one of the claims 1 to 5, wherein the controller is further configured to:
cause the display to display a preview image that is to be displayed on the another one of the plurality of image display apparatuses and display guide information according to a rule, wherein the rule is applied to a plurality of images respectively displayed on the plurality of image display apparatuses.

7. The terminal of any one of the claims 1 to 6, wherein the first information includes at least one of a theme preset for an ambient environment in which the plurality of image display apparatuses are arranged, information related to an external device arranged in the ambient environment, or status information related to the ambient environment.

8. The terminal of any one of the claims 1 to 7, wherein the controller is further configured to:
cause the display to display a plurality of objects respectively corresponding to the plurality of image display apparatuses based on at least one of information regarding relative locations of the plurality of image display apparatuses, or size information regarding each of the plurality of image display apparatuses.

9. The terminal of any one of the claims 1 to 8, wherein the controller is further configured to:
cause the display to display the plurality of objects corresponding to the plurality of image display apparatuses further based on captured images of the plurality of image display apparatuses, strength of signals received from the plurality of image display apparatuses, or strength of signals transmitted and received among the plurality of image display apparatuses.

10. The terminal of any one of the claims 1 to 9, wherein the controller is further configured to:
obtain the image in response to an input of at least one of a rule or a theme to be applied to the plurality of images displayed on the plurality of image display apparatuses.

11. The terminal of any one of the claims 1 to 10, wherein the controller is further configured to:
obtain the image in response to an input of a captured image by a camera.

12. A method for controlling a mobile terminal (100) having a display(151), the method comprising:
receiving first information, via a wireless communication unit (110), related to a plurality of adjacently arranged image display apparatuses (200-1, ...200-n), wherein the information is received from the plurality of image display apparatuses or from an external server (300);
displaying, on the display, a plurality of objects respectively corresponding to the plurality of image display apparatuses;
obtaining an image to be displayed on at least one of the plurality of image display apparatuses based on the first information; and
displaying, on the display, the obtained image on the object corresponding to the at least one image display apparatus.

13. The method of claim 12, wherein the first information comprises at least one of information of relative locations of the plurality of image display apparatuses, size information regarding each of the plurality of image display apparatuses, information related to an image currently displayed by at least one of the plurality of image display apparatuses, information regarding an ambient environment in which the plurality of image display apparatuses are arranged, or information related to previously-displayed images of the plurality of image display apparatuses.

14. The method of claim 12 or 13, further comprising:
obtaining an image to be displayed on another one of the plurality of image display apparatuses based on the information related to the image currently displayed on at least one of the plurality of image display apparatuses.

15. The method of any one of the claims 12 to 14, further comprising:
obtaining the image to be displayed on the another one of the plurality of image display apparatuses based on at least one of color information regarding the image currently displayed on at least one of the plurality of image display apparatuses, object information included in the image currently displayed on at least one of the plurality of image display apparatuses, or theme or category information preset for the image currently displayed on at least one of the plurality of image display apparatuses.
